# EUROPÄISCHE PATENTSCHRIFT

(11) **EP 2 616 770 B1**
(45) Veröffentlichungstag und Bekanntmachung des Hinweises auf die Patenterteilung: **20.01.2016**
(21) Anmeldenummer: 11745556.8
(22) Anmeldetag: 17.08.2011
(51) Int. Cl.: G01C 15/00, G01C 15/06

(54) **GEODÄTISCHES VERMESSUNGSSYSTEM MIT IN EINER FERNBEDIENEINHEIT INTEGRIERTER KAMERA**
GEODETIC SURVEY SYSTEM HAVING A CAMERA INTEGRATED IN A REMOTE CONTROL UNIT
SYSTÈME DE MESURE GÉODÉSIQUE COMPORTANT UN APPAREIL DE PRISE DE VUES INTÉGRÉ À UNE UNITÉ DE TÉLÉCOMMANDE

(30) Priorität: 16.09.2010 EP 10177211
(43) Veröffentlichungstag der Anmeldung: 24.07.2013
(73) Patentinhaber: Leica Geosystems AG, 9435 Heerbrugg (CH)
(72) Erfinder: ZOGG, Hans-Martin, CH-8592 Uttwil (CH); LIENHART, Werner, AT-8010 Graz (AT); NINDL, Daniel, AT-6020 Innsbruck (AT); KOTZUR, Norbert, CH-9450 Altstätten (CH)
(74) Vertreter: Kaminski Harmann
(86) Internationale Anmeldenummer: PCT/EP2011/064172
(87) Internationale Veröffentlichungsnummer: WO 2012/034813

(56) Entgegenhaltungen:
- EP-A1- 2 194 399
- EP-A2- 1 503 176
- WO-A1-2010/080950
- US-A1- 2008 180 319

## Beschreibung

Die Erfindung betrifft ein Vermessungssystem mit einer Positionsbestimmungseinheit, insbesondere einer Totalstation oder einem GNSS-Modul, zur Bestimmung einer Zielposition in einem definierten Koordinatensystem, und mit einer mobilen, mit einem Vermessungsstab ausgestatteten Zieleinheit zur Absteckung und/oder Positionsbestimmung von Zielpunkten in einem definierten Koordinatensystem nach dem Oberbegriff des Anspruchs 1, eine mobile Zieleinheit nach Anspruch 7 für ein erfindungsgemässes Vermessungsgerät, eine Fernbedieneinheit nach Anspruch 11 für eine erfindungsgemässe mobile Zieleinheit sowie ein Verfahren nach Anspruch 14 zum Abstecken und/oder Bestimmen der Position eines Zielpunkts mit einem erfindungsgemässen Vermessungssystem.

Zum Vermessen eines oder insbesondere mehrerer Zielpunkte sind seit der Antike zahlreiche geodätische Vermessungsgeräte bekannt. Als räumliche Standarddaten werden dabei Entfernung und Richtung bzw. Winkel von einem Messgerät zum zu vermessenden Zielpunkt aufgenommen sowie insbesondere die absolute Position des Messgerätes nebst eventuell vorhandenen Bezugspunkten erfasst.

Allgemein bekannte Beispiele für solche geodätische Vermessungsgeräte stellen Theodolit, Tachymeter und Totalstation, die auch als elektronischer Tachymeter oder Computer-Tachymeter bezeichnet wird, dar. Eine geodätische Messvorrichtung des Stands der Technik ist beispielsweise in der Veröffentlichungsschrift EP 1 686 350 beschrieben. Derartige Geräte verfügen über elektrosensorische Winkel- und Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung gegebenenfalls noch mit einem äusseren Bezugssystem verknüpft werden.

In vielen geodätischen Anwendungen erfolgt eine Vermessung von Punkten, indem dort speziell ausgestaltete Zielobjekte platziert werden. Diese bestehen meist aus einem Lotstock mit einer anzielbaren Markierung bzw. einem Reflektor zur Definition der Messtrecke bzw. des Messpunktes. Durch ein zentrales geodätisches Vermessungsgerät kann somit auch eine grössere Zahl von Zielobjekten vermessen werden, was allerdings deren Identifikation erforderlich macht. Bei solchen Vermessungsaufgaben werden zur Steuerung des Messvorgangs sowie zur Festlegung oder Registrierung von Messparametern eine Anzahl von Daten, Anweisungen, Sprache und weiteren Informationen zwischen Zielobjekt - insbesondere einem handhaltbaren Datenerfassungsgerät seitens des Zielobjekts - und zentralem Messgerät übertragen. Beispiele für solche Daten sind die Identifikation des Zielobjekts, Neigung des Lotstocks, Höhe des Reflektors über Grund, Reflektorkonstanten oder Messwerte wie Temperatur oder Luftdruck.

Moderne Totalstationen verfügen über Mikroprozessoren zur digitalen Weiterverarbeitung und Speicherung erfasster Messdaten. Die Geräte sind in der Regel in kompakter und integrierter Bauweise hergestellt, wobei meist koaxiale Distanz- und Winkelmesselemente sowie Rechen-, Steuer- und Speichereinheiten in einem Gerät integriert sind. Abhängig von der Ausbaustufe der Totalstation sind Mittel zur Motorisierung der Zieloptik, zur reflektorlosen Streckenmessung, zur automatischen Zielsuche und -verfolgung und zur Fernsteuerung des gesamten Geräts integriert. Aus dem Stand der Technik bekannte Totalstationen verfügen des Weiteren über eine Funkdatenschnittstelle zum Aufbau einer Funkverbindung zu externen Peripheriekomponenten wie z.B. zu einem Datenerfassungsgerät, welches insbesondere als handhaltbarer Datenlogger, Fernbedieneinheit, Feldrechner, Notebook, Kleincomputer oder PDA ausgebildet sein kann. Mittels der Datenschnittstelle ist es möglich, von der Totalstation erfasste und gespeicherte Messdaten zur externen Weiterverarbeitung auszugeben, extern erfasste Messdaten zur Speicherung und/oder Weiterverarbeitung in die Totalstation einzulesen, Fernsteuersignale zur Fernsteuerung der Totalstation oder einer weiteren externen Komponente insbesondere im mobilen Feldeinsatz ein- bzw. auszugeben und Steuerungs-Software in die Totalstation zu überspielen.

Zum Anvisieren bzw. Anzielen des zu vermessenden Zielpunkts weisen gattungsgemässe geodätische Vermessungsgeräte beispielsweise ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z.B. des Datenloggers oder der Fernbedieneinheit - dargestellt werden kann. Die Optik der Visiereinrichtung kann dabei einen manuellen Fokus - beispielsweise eine Stellschraube zur Veränderung der Position einer Fokussieroptik - aufweisen oder über einen Autofokus verfügen, wobei das Verändern der Fokusposition z.B. durch Servomotoren erfolgt. Automatische Fokussiereinrichtungen für Zielfernrohre geodätischer Geräte sind z.B. aus der DE 197 107 22, der DE 199 267 06 oder der DE 199 495 80 bekannt.

Das Anvisieren eines Zielreflektors kann dabei insbesondere mittels eines dem Benutzer im Display des Datenloggers bzw. der Fernbedieneinheit angezeigten Live-Bildes erfolgen, das von einer - z.B. koaxial im Zielfernrohr oder mit zum Zielfernrohr paralleler Ausrichtung angeordneten - Kamera als Visiereinrichtung der Totalstation bereitgestellt wird. Demnach kann der Benutzer die Totalstation anhand des Live-Bildes entsprechend auf das gewünschte, im Live-Bild erkennbare Ziel ausrichten.

EP 2 194 399 A1 offenbart ein Vermessungssystem mit einer Positionsbestimmungseinheit, einer mobilen Zieleinheit mit einen Vermessungsstab, dessen unteres Ende in Zielpunktkontakt bringbar ist, sowie eine handhaltbare Fernbedieneinheit, die ein Display aufweist und derart am Vermessungsstab ansteckbar ist, dass sie sich im angesteckten Zustand in fixer Positionsrelation zu dem Ziel befindet.

Die EP 1 734 336 offenbart ein Vermessungssystem mit einer Zieleinheit, die einen Reflektor sowie einen optischen Empfänger und Sender aufweist. Dabei wird vorgeschlagen, den optischen Sender der Zieleinheit unter anderem zur Unterstützung des automatischen Ziel-Suchprozesses zu verwenden. So kann das Zielobjekt nach dem Empfang der Such- oder Messstrahlung die eigene Identifikation, wie beispielsweise die Reflektornummer oder der Reflektortyp, anhand des Senders der Zieleinheit zurück zur Vermessungsstation übermitteln. Die Vermessungsstation kann damit das gesuchte Zielobjekt identifizieren und sich optimal bezüglich des Zielobjekts konfigurieren.

Auch die EP 1 573 271 offenbart eine Zieleinheit mit optischem Sender, wobei - nach Empfang von Messstrahlung eines Vermessungsgeräts - die Zieleinheit ein optisches Signal zurücksendet, welchem die eigene Identität der Zieleinheit aufmoduliert ist.

Den vorgenannten Vermessungssystemen aus dem Stand der Technik ist gemeinsam, dass, gegebenenfalls auch unter Verwendung einer Kamera, die Zieleinheit bzw. ein mit der Zieleinheit versehener Vermessungsstab von einer stationären Positionsbestimmungseinheit wie beispielsweise einer Totalstation anvisiert oder beobachtet wird. Es wird jedoch keine automatisierte Führung eines Operators, unter Verwendung der von der stationären Positionsbestimmungseinheit aufgenommenen Bilddaten, zu einem vorgesehenen Zielpunkt zwecks dessen Absteckung offenbart, so dass der Absteckungsprozess für einen Operator relativ mühsam und mit einem erheblichen Zeitaufwand verbunden ist, wenn eine genaue Absteckung des Zielpunkts gewährleistet werden soll.

Für eine Lösung dieses Problems wird in der US 7 222 021 bzw. der korrespondierenden EP 1 293 755 ein Vermessungssystem, in dieser Patentschrift bezeichnet als ein Bedienerleitsystem, vorgeschlagen, mit einer stationären Basisstation entsprechend einer stationären Positionsbestimmungseinheit, welche ausgestattet ist mit Abbildungsmitteln wie z.B. einer Kamera, und einer mobilen Station mit der Funktion einer mobilen Zieleinheit, welche ausgestattet ist mit Anzeigemitteln wie z.B. einem Display zum Darstellen einer aktuellen Position des Benutzers basierend auf gespeicherten Landschaftsbildern bzw.-daten und aktuellen Bildern, von der stationären Messeinheit aus gesehen. Es wird des Weiteren offenbart, wie ein Bediener mittels Korrelation zwischen den aktuell von der stationären Messstation aus gemessenen Positionsdaten, einschliesslich Kamerabild, für die mobile Station, gespeicherten Daten mit der vorgesehenen Position des Zielpunkts durch Markierung auf dem Display der Zieleinheit zum Zielpunkt geleitet werden kann, z.B. durch Richtungsanzeige mittels eines Pfeils auf dem Display.

Zwar kann mit diesem in der US 7 222 021 bzw. der korrespondierenden EP 1 293 755 beschriebenen System der Prozess einer Absteckung eines Zielpunkts beschleunigt werden. Aus der Offenbarung lassen sich jedoch keine Möglichkeiten zur Verbesserung der Genauigkeit der Absteckung des Zielpunkts ableiten; denn die mobile Station verfügt über keine eigenen Bilderfassungsmittel, und es werden nur von der entfernten stationären Totalstation reale Bilder erfasst, während zum Führen der mobilen Station, wie z.B. eines Lotstabs mit Reflektor, lediglich synthetische, berechnete Darstellungen aus der Vogelperspektive auf einem mobilen Display verwendet werden.

Die WO 2010/080950 offenbart essentiell einen Lotstab mit einer (gemäss Abbildungen) am oberen Ende aufgesetzten Kamera zur Bestimmung eines Azimuts für einen Zielpunkt. Zu bemerken ist, dass diese Positionierung der Kamera die Operationsfähigkeit des Geräts durch Abschattung des Bildes durch einen Benutzer einschränken kann. Verbindung zu einem Theodolithen bzw. einer Totalstation wird erwähnt, aber ohne Offenbarung über eine Koordination / Korrelation von Bilddaten. Es finden sich in diesem Dokument keine Aussagen über die Ausnutzung einer Wirkung der aufgesetzten Kamera bzw. von deren Daten auf eine mögliche präzise Positionierung des Lotstabes auf einen Zielpunkt.

Aufgabe der vorliegenden Erfindung ist es, ein Vermessungssystem und zugehörige Einheiten für das Vermessungssystem sowie ein entsprechendes Vermessungsverfahren bereitzustellen, mit denen der Prozess der Absteckung und/oder Positionsbestimmung von Zielpunkten weiter beschleunigt, bedienerseitig weiter vereinfacht und insbesondere die Präzision bzw. Genauigkeit des Prozesses verbessert werden kann. Eine weitere Aufgabe der Erfindung ist es, eine Möglichkeit bereitzustellen, die tatsächliche Position eines abgesteckten Zielpunkts in Korrelation mit gespeicherten und aktuellen Daten einer stationären Positionsbestimmungseinheit zum Absteckungszeitpunkt zu speichern und so zu dokumentieren.

Gegenstand der Erfindung ist ein Vermessungssystem mit einer Positionsbestimmungseinheit, insbesondere einer Totalstation oder einem GNSS-Modul, zur Bestimmung einer Zielposition in einem definierten Koordinatensystem, sowie einer mobilen Zieleinheit zur Absteckung und/oder Positionsbestimmung von Zielpunkten in dem Koordinatensystem. Die Zieleinheit weist einen Vermessungsstab auf, dessen unteres Ende in Kontakt zum Zielpunkt bringbar ist. Auf dem Vermessungsstab ist ein Ziel anbringbar, dessen Zielposition hochpräzise bestimmbar ist. Das Ziel kann insbesondere als ein anhand einer Totalstation anmessbarer Vermessungsreflektor, beispielsweise als ein reflektierendes Prisma, oder als eine mit dem GNSS-Modul der Positionsbestimmungseinheit in Datenverbindung stehende GNSS-Antenne ausgebildet sein.

Die Positionsbestimmungseinheit bestimmt beispielsweise die Winkel in horizontaler und vertikaler Richtung sowie die Entfernung zum Ziel, wie z.B. einem Prisma. Für ein erfindungsgemässes Vermessungssystem mit einer Ausführungsform der Positionsbestimmungseinheit mit einem GNSS-Modul ist beispielsweise die mobile Zieleinheit mit einer GNSS-Antenne auf dem Vermessungsstab ausgestattet, so dass die aktuelle Position des Ziels aus GNSS-Messungen bestimmt werden kann.

Als Positionsbestimmungseinheit für ein erfindungsgemässes Vermessungssystem kommen grundsätzlich alle Ausführungsformen, insbesondere Totalstationen wie Theodoliten oder GNSS-Module (GNSS = Globales Navigationssatellitensystem wie bspw. das dem Fachmann bekannte und als GPS abgekürzte Global Positioning System), in Frage, wie sie aus dem Stand der Technik für geodätische Vermessungssysteme bekannt sind, wenn sie die Anforderungen, insbesondere an die datenbezogene Kommunikation mit einer mobilen Zieleinheit, gemäss der vorliegenden Erfindung erfüllen. Deswegen wird auf besondere geeignete Ausführungsformen der Positionsbestimmungseinheit nachfolgend nicht weiter eingegangen.

Die mobile Zieleinheit umfasst des Weiteren eine handhaltbare Fernbedieneinheit für das Vermessungssystem. Die Fernbedieneinheit weist ein elektronisches grafisches Display auf und ist derart an einer Aufnahme des Vermessungsstabs ansteckbar, dass sich die Fernbedieneinheit - im angesteckten Zustand - in fixer Positionsrelation zu dem auf dem Vermessungsstab angebrachten Ziel befindet.

Erfindungsgemäss umfasst die Fernbedieneinheit eine Kamera zur Aufnahme von einem Kamerabild in definierter Aufnahmerichtung. Des Weiteren ist erfindungsgemäss eine mit der Positionsbestimmungseinheit und der Kamera in Datenverbindung stehende Bildverarbeitungs- und Auswerteeinheit vorgesehen, durch die - anhand Kenntnis der fixen Positionsrelation und der definierten Aufnahmerichtung sowie in Abhängigkeit von der bestimmten Zielposition - Bilddaten der Kamera in dem Koordinatensystem in räumlichen Bezug mit den Zielpunkten gebracht werden.

Die fixe Positionsrelation der Fernbedieneinheit, sowohl gegenüber dem auf dem Vermessungsstab angebrachten Ziel als auch gegenüber dem unteren Ende des Vermessungsstabs, muss bekannt bzw. mindestens einmal vermessen und in die Systemdaten eingespeichert sein oder kann mit einem mit der mobilen Zieleinheit bzw. der angesteckten Fernbedieneinheit mit der zugehörigen Kamera verbundenen Gerät zum Vermessungs- bzw. Absteckungszeitpunkt für einen Zielpunkt in Echtzeit zu dem zugehörigen Vorgang gemessen und protokolliert werden.

Als geeignete Messeinheiten für derartige Positionsbestimmungen ausgehend von der mobilen Zieleinheit bzw. der Fernbedieneinheit sind beispielsweise bekannte Systeme basierend auf Laser-, Ultraschall-, Radar- oder Radiowellenmessung in den bekannten Frequenzbereichen geeignet, welche mit der mobilen Zieleinheit verbunden oder darin bzw. in der Fernbedieneinheit integriert sein können.

Für eine Positionsbestimmung der Fernbedieneinheit, welche der mobilen Zieleinheit zugeordnet ist, bezüglich der stationären Positionsbestimmungseinheit, kann auch Stereo-Photometrie unter Verwendung einer weiteren Kamera, angebracht entweder an der stationären Positionsbestimmungseinheit zwecks Beobachtung von dort aus oder an der mobilen Zieleinheit, verwendet werden.

Zur Bestimmung einer Neigung der Fernbedieneinheit bzw. der zugehörigen Kamera bezüglich des Vermessungsstabs können entweder ein Neigungssensor oder vorbestimmte Winkel (z.B. 45° oder 90°) zur Montage bei der Ausrichtung der Fernbedieneinheit bzw. der zugehörigen Kamera bezüglich der Achse des Vermessungsstabs vorgesehen sein. Die (azimutale) Ausrichtung der Fernbedieneinheit bzw. der zugehörigen Kamera kann beispielsweise mit einem, insbesondere elektronischen, Kompass, der beispielsweise in die Fernbedieneinheit, den Vermessungsstab oder das Ziel integriert ist, bestimmt werden. Alternativ kann der Vermessungsstab mit der daran angebrachten Fernbedieneinheit und der Kamera in einer bekannten Richtung, z.B. zur Positionsbestimmungseinheit, der Sonne oder zu von der Positionsbestimmungseinheit anvisierten bekannten Positionen ausgerichtet werden.

D.h., bezüglich der räumlichen Ausrichtung der mobilen Zieleinheit (also des Lotstabs mit oben angebrachtem Ziel und fest - d.h. in bekannter Stellung - angesteckter Fernbedieneinheit) im definierten Koordinatensystem kann entweder von getroffenen fixen Annahmen ausgegangen werden, wie beispielsweise dass der Vermessungsstab in Messstellung stets lotrecht gehalten wird und die Fernbedieneinheit stets in Richtung der Totalstation, in Nordrichtung oder in Richtung der Sonne azimutal ausgerichtet ist), oder aber es können speziell dafür geeignete Sensoren (wie z.B. ein zweiachsiger Neigungssensor zur Bestimmung der aktuellen Neigung des Vermessungsstabs und ein Kompass für die azimutale Ausrichtung der Zieleinheit) vorgesehen sein.

Es wird bevorzugt, dass die Kamera, das Display, die Positionsbestimmungseinheit sowie die Bildverarbeitungs- und Auswerteeinheit derart ausgebildet sind und derart zusammenwirken, dass in Abhängigkeit von der aktuell bestimmten Zielposition einer oder mehrere im Sichtfeld der Kamera befindliche abzusteckende bzw. vermessene Zielpunkte, deren räumliche Koordinaten bekannt sind, zusammen mit dem Kamerabild im Display anzeigbar sind. Vorteilhaft werden dabei Markierungen für die Zielpunkte entsprechend ihrer Position dem Kamerabild überlagert auf dem Display angezeigt.

Vorteilhaft ist insbesondere, wenn eine durch die Kamera aufgenommene Filmsequenz live am Display angezeigt wird und dabei - der angezeigten Filmsequenz überlagert - in Abhängigkeit von der aktuell bestimmten Zielposition ein oder mehrere abzusteckende bzw. vermessene Zielpunkte, deren räumliche Koordinaten bekannt sind, im Kamerabild markiert und auf dem Display angezeigt werden.

Vorteilhaft sind die Kamera und das Display derart an der Fernbedieneinheit angeordnet und ausgerichtet, dass die Flächennormale des Displays im Wesentlichen parallel zur Aufnahmerichtung der Kamera ausgerichtet ist. Vorzugsweise sind dabei die optischen Achsen des Displays und der Kamera im Wesentlichen koaxial - jedoch die Blickrichtungen entgegengesetzt zueinander - ausgerichtet. Dieses bedeutet mit anderen Worten, dass einem Bediener eine direkte Durchsicht auf die Position eines abzusteckenden Zielpunkts, im Display gemäss den angezeigten gespeicherten Daten und der zugehörigen Markierung, ermöglicht wird. - Durch einen solchen "Durchsicht-Modus" wird eine sehr genaue Übereinstimmung von tatsächlich erfolgter Markierung eines Zielpunkts mit dessen vorgesehener Platzierung und zugleich die Speicherung und exakte Dokumentation der Zielplatzierung zu deren aktuellem Zeitpunkt in Korrelation mit den simultan aufgenommenen Daten der (stationären) Positionsbestimmungseinheit ermöglicht. - Eine derartige Verwendungsmöglichkeit ist im bekannten Stand der Technik weder offenbart noch nahe gelegt.

Vorzugsweise ist die Kamera derart ausgerichtet, dass - im an den Vermessungsstab angesteckten Zustand der Fernbedieneinheit - das untere Ende des Vermessungsstabs im Sichtfeld der Kamera liegt.

Ebenso wird bevorzugt, dass im an den Vermessungsstab angesteckten Zustand der Fernbedieneinheit - durch die Struktur des Vermessungsstabs - die fixe Positionsrelation von der Fernbedieneinheit relativ zum angebrachten Ziel gewährleistet wird. Die fixe Positionsrelation der Bildverarbeitungs- und Auswerteeinheit der Fernbedieneinheit zum Ziel kann insbesondere mittels eines der folgenden Mittel verfügbar gemacht werden:
- Speichermittel, worin die fixe Positionsrelation abgespeichert ist,
- Positionsrelation-Bestimmungsmittel, die einen aktuellen Abstand von der Fernbedieneinheit zum Ziel und/oder eine aktuelle Ausrichtung, insbesondere die azimutale und/oder elevative Ausrichtung, der Fernbedieneinheit bestimmbar machen, im Speziellen wobei die Positionsrelation-Bestimmungsmittel einen Abstandssensor und/oder einen in die Fernbedieneinheit integrierten Kompass und/oder einen in die Fernbedieneinheit integrierter Neigungssensor aufweisen,
- Eingabemittel, so dass Daten bezüglich der fixen Positionsrelation vom Benutzer eingebbar sind,
- ein an dem Vermessungsstab, insbesondere der Aufnahme, elektronisch oder graphisch abgelegter Datensatz, der Informationen bezüglich der durch den Vermessungsstab gewährleisteten fixen Positionsrelation umfasst, und in der Fernbedieneinheit vorgesehene Auslesemittel, sodass der Datensatz fernbedieneinheitsseitig auslesbar ist.

Ein weiterer Gegenstand der Erfindung ist eine mobile Zieleinheit für ein erfindungsgemässes Vermessungssystem, welche einen Vermessungsstab aufweist, dessen unteres Ende in Kontakt zum Zielpunkt bringbar ist. Auf dem Vermessungsstab ist ein Ziel anbringbar, dessen Zielposition hochpräzise bestimmbar ist. Das Ziel kann insbesondere als ein anhand einer Totalstation anmessbarer Vermessungsreflektor oder als eine mit dem GNSS-Modul der Positionsbestimmungseinheit in Datenverbindung stehende GNSS-Antenne ausgebildet sein. Die mobile Zieleinheit umfasst des Weiteren eine handhaltbare Fernbedieneinheit für das Vermessungssystem. Die Fernbedieneinheit weist ein elektronisches grafisches Display auf und ist derart an einer Aufnahme des Vermessungsstabs ansteckbar, dass sich die Fernbedieneinheit - im angesteckten Zustand - in fixer Positionsrelation zu dem auf dem Vermessungsstab angebrachten Ziel befindet.

Erfindungsgemäss umfasst die Fernbedieneinheit eine Kamera zur Aufnahme von einem Kamerabild in definierter Aufnahmerichtung. Des Weiteren ist erfindungsgemäss eine mit der Positionsbestimmungseinheit und der Kamera in Datenverbindung stehende Bildverarbeitungs- und Auswerteeinheit vorgesehen, durch die - anhand Kenntnis der fixen Positionsrelation und der definierten Aufnahmerichtung sowie in Abhängigkeit von der bestimmten Zielposition - Bilddaten der Kamera in dem Koordinatensystem in räumlichen Bezug mit den Zielpunkten gebracht werden.

Vorteilhaft sind die Kamera und das Display derart an der Fernbedieneinheit angeordnet und ausgerichtet, dass für einen Bediener eine Durchblickmöglichkeit mittels der Kamera auf einen Geländeboden ermöglicht wird, wobei die Flächennormale des Displays im Wesentlichen parallel zur Aufnahmerichtung der Kamera ausgerichtet ist, insbesondere wobei die optischen Achsen des Displays und der Kamera im Wesentlichen koaxial - jedoch die Blickrichtungen entgegengesetzt zueinander - ausgerichtet sind.

Weitere Ausführungsformen einer erfindungsgemässen mobilen Zieleinheit für ein erfindungsgemässes Vermessungssystem sind in den abhängigen Ansprüchen beschrieben.

Ein weiterer Gegenstand der Erfindung ist eine Fernbedieneinheit für eine erfindungsgemässe mobile Zieleinheit. Die Fernbedieneinheit weist ein elektronisches grafisches Display auf und ist derart an einer Aufnahme des Vermessungsstabs ansteckbar, dass sich die Fernbedieneinheit - im angesteckten Zustand - in fixer Positionsrelation zu dem auf dem Vermessungsstab angebrachten Ziel befindet. Erfindungsgemäss umfasst die Fernbedieneinheit eine Kamera zur Aufnahme von einem Kamerabild in definierter Aufnahmerichtung. Dabei ist eine mit der Positionsbestimmungseinheit und der Kamera in Datenverbindung stehende Bildverarbeitungs- und Auswerteeinheit vorgesehen, durch die - anhand Kenntnis der fixen Positionsrelation und der definierten Aufnahmerichtung sowie in Abhängigkeit von der bestimmten Zielposition - Bilddaten der Kamera in dem Koordinatensystem in räumlichen Bezug mit den Zielpunkten gebracht werden.

Weitere Ausführungsformen einer erfindungsgemässen Fernbedieneinheit sind in den abhängigen Ansprüchen beschrieben.

Gegenstand der Erfindung ist ausserdem ein Verfahren zum Abstecken und/oder Bestimmen einer Position eines Zielpunkts mit einem erfindungsgemässen Vermessungssystem. Das Verfahren umfasst die folgenden Schritte:
- Anstecken einer handhaltbaren Fernbedieneinheit mit einer daran angebrachten Kamera an einen Vermessungsstab, dessen unteres Ende in Zielpunktkontakt bringbar ist, wobei die Fernbedieneinheit in einer fixen Positionsrelation zu einem auf dem Vermessungsstab angebrachten Ziel angebracht wird,
- Erstellen bzw. Gewährleisten einer Verbindung zum Datenaustausch zwischen der mobilen Zieleinheit, insbesondere der Fernbedieneinheit, und der Positionsbestimmungseinheit,
- Ausrichten der Kamera in Richtung eines Geländebodens, in dem Zielpunkte abzustecken oder zu vermessen sind, und Aufnahme von Bildern und deren Anzeige auf einem Display der Fernbedieneinheit fortlaufend oder in definierten Zeitintervallen,
- Einblenden einer Richtungsangabe, beispielsweise mittels eines Pfeils und/oder Distanzangaben, zu einem vorgesehenen Zielpunkt und/oder einer Markierung für die vorgesehene Position des vorgesehenen Zielpunkts in das Bild der Kamera im Display,
- Führen der Zieleinheit, bis eine Übereinstimmung der Abbildung des unteren Endes des Vermessungsstabs mit der Markierung für die vorgesehene Position des Zielpunkts erreicht ist,
- Abstecken oder Bestimmen der Position des Zielpunkts.

Optional kann zusätzlich ein Aufnehmen in Echtzeit und Abspeichern eines Bildes mittels der Kamera von dem abgesteckten oder positionsbestimmten Zielpunkt vorgenommen werden.

In ihrer Gesamtheit vereinfacht bzw. erleichtert die vorliegende Erfindung für einen Bediener den Prozess zur Absteckung und/oder Positionsbestimmung von Zielpunkten ausserordentlich, was verbunden ist mit einer erheblichen erreichbaren Prozessbeschleunigung. Zugleich ermöglicht die Erfindung eine deutliche Verbesserung für die Genauigkeit bei der Absteckung und Positionsbestimmung von Zielpunkten. Die an der handhaltbaren Fernbedieneinheit angebrachte Kamera, als ein Hauptmerkmal der vorliegenden Erfindung zur Verbesserung von gattungsgemässen Vermessungssystemen, erleichtert und verbessert die Durchführung der vorgenannten Prozesse, indem eine aktuelle Live-Abbildung des unteren Endes des Vermessungsstabs in einem Bild der Fernbedieneinheitskamera mit einer Markierung der vorgesehenen oder gespeicherten Position eines Zielpunkts überlagert wird. Der Video-Stream von dieser Kamera zeigt eine aktuelle Sicht auf den Boden des zu vermessenden Geländes.

Dieses ist wesentlich verschieden von den Darstellungsmöglichkeiten bekannter gattungsgemässer Systeme, bei denen für einen Benutzer Bodenansichten typischerweise aus aktuellen Messdaten einer stationären Positionsbestimmungseinheit, in Verbindung mit einer mobilen Zieleinheit, und gespeicherten Daten synthetisiert werden, ohne - abgesehen von Entfernung und Richtung zwischen stationärer Positionsbestimmungseinheit und mobiler Zieleinheit - weitere Daten bezüglich der mobilen Zieleinheit zu berücksichtigen.

Die an der handhaltbaren Fernbedieneinheit angebrachte Kamera ermöglicht, wie vorangehend beschrieben, einen "Durchsicht-Modus" auf den Boden, ohne dass - bei entsprechender Ausrichtung der Kamera - der Benutzer gezwungen ist, selbst ständig auf den Boden (insbesondere direkt unter oder vor ihm) blicken muss, was dem Bediener die Fortbewegung in insbesondere schwierig begehbarem Gelände erleichtert.

Bei entsprechender Ausstattung der handhaltbaren Fernbedieneinheit bzw. der daran angebrachten Kamera, beispielsweise mit Sensoren zur Bestimmung der Ausrichtung der Kamera, kann erfindungsgemäss dem Bediener auch die Aufnahme von Überblicksphotos einer zu vermessenden Landschaft aus der Position der mobilen Zieleinheit ermöglicht werden, deren Information durch Korrelation mit der stationären Positionsbestimmungseinheit in deren Koordinatensystem umgesetzt werden kann.

In besonders steilem Gelände kann es ggf. zu Beeinträchtigungen dadurch kommen, dass die Position eines abzusteckenden Zielpunkts nicht mehr genau in das aktuelle Bild der Kamera der Fernbedieneinheit projiziert werden kann. Hierfür können Korrekturen der für den abzusteckenden Zielpunkt eingeblendeten Positionsmarke vorgesehen sein, indem ein DTM ("digital terrain model" oder digitales Geländemodel) des Geländes für das entsprechende Einblenden der Positionsmarke herangezogen und mitberücksichtigt wird. Ist kein DTM des Geländes verfügbar, so kann auch eine RIM-Kamera (Range Imaging Sensor) in die Fernbedieneinheit integriert sein, anhand welcher vor oder auch während der Absteckung und des Messvorgangs ein Geländemodell erfasst und somit berücksichtigt werden kann (oder alternativ anhand von Stereophotogrammetrie).

Das erfindungsgemässe Verfahren und die erfindungsgemässen Vorrichtungen werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen
- Figur 1: ein Vermessungssystem gemäss dem Stand der Technik;
- Figur 2: ein Vermessungssystem gemäss der vorliegenden Erfindung;
- Figur 3: ein Vermessungssystem gemäss Figur 2, mit zusätzlich einer Richtungsangabe von einem in einem Display abgebildeten unteren Ende eines Vermessungsstabs zu einer Markierung für einen vorgesehenen Zielpunkt;
- Figur 4: eine weitere mögliche Ausführungsform eines erfindungsgemässen Vermessungssystems;
- Figur 5: eine weitere mögliche Ausführungsform eines erfindungsgemässen Vermessungssystems;
- Figur 6: die Funktionsweise eines erfindungsgemässen Vermessungssystems in einem Einsatz im Feld anhand des Bildes im Display einer erfindungsgemässen Fernbedieneinheit;
- Figur 7: eine mögliche Ausführungsform einer erfindungsgemässen Zieleinheit;
- Figur 8: eine weitere mögliche Ausführungsform einer erfindungsgemässen Zieleinheit;
- Figur 9: eine mobile Zieleinheit mit GNSS-Modul, wobei sämtliche Komponenten der mobilen Zieleinheit in einem handhaltbaren Gerät integriert sind;
- Figur 10: ein möglicher Anwendungsfall der in Figur 9 gezeigten mobilen Zieleinheit im Feld;
- Figur 11: eine Draufsicht der in Figur 9 gezeigten mobilen Zieleinheit; und
- Figur 12: eine Draufsicht einer weiteren Ausführungsvariante für die in Figuren 9 und 11 gezeigte mobile Zieleinheit.

Die folgende Beschreibung der Figuren ist auf die Anwendung der Erfindung zur Absteckung von Zielpunkten ausgerichtet. Eine Positionsbestimmung von Zielpunkten im Sinn der vorliegenden Erfindungen erfolgt in dazu völlig analoger Weise. Alle vorangehend und noch nachfolgend beschriebenen Ausführungsformen der Erfindung sind beliebig miteinander und auch mit dem vorgenannten Stand der Technik kombinierbar, wenn nicht ausdrücklich anders festgestellt.

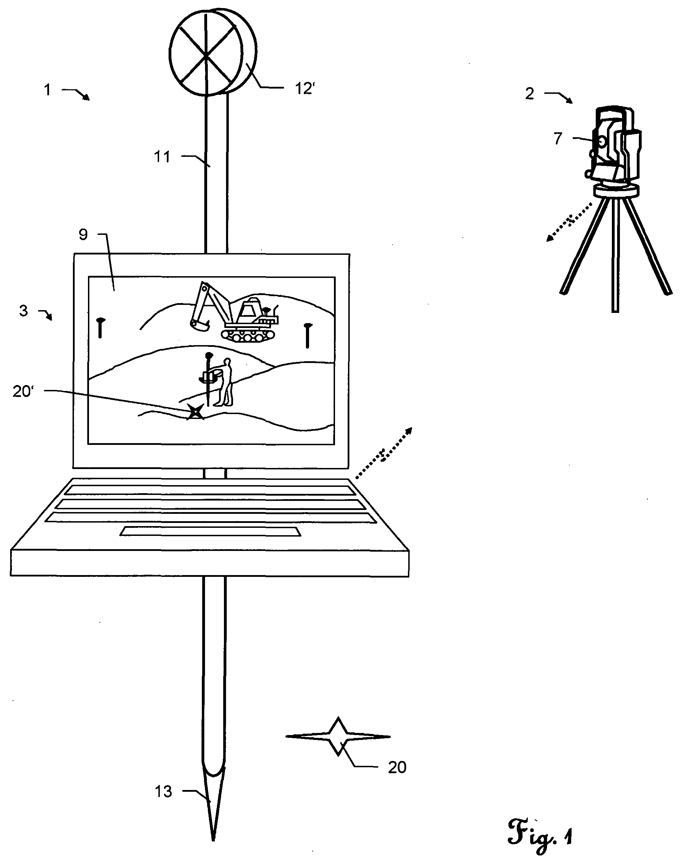

Figur 1 zeigt ein Vermessungssystem gemäss dem Stand der Technik. Das Vermessungssystem umfasst eine als Totalstation ausgebildete Positionsbestimmungseinheit 2 und eine mobile Zieleinheit 1 mit einem Vermessungsstab 11, der ein unteres Ende 13 aufweist. Auf dem Vermessungsstab 11 ist ein Ziel aufgebracht, das in diesem Beispiel als ein von der Totalstation 2 anmessbarer Vermessungsreflektor 12' ausgebildet ist. Eine handhaltbare Fernbedieneinheit 3, die vorzugsweise als ein Datenlogger ausgebildet ist, mit einem Display 9 ist an einer nicht dargestellten Aufnahme des Vermessungsstabs angesteckt. Im Display 9 ist ein fokussiertes Live-Bild einer Kamera als Visiereinrichtung 7 der Totalstation 2 angezeigt. Die Kamera kann in ein Zielfernrohr als Visiereinrichtung 7 der Totalstation 2, mit entsprechender Optik, integriert sein. Ausser der aktuellen Ansicht eines Bedieners der mobilen Zieleinheit 1 ist im Live-Bild der Kamera als Markierung 20' die vorgesehene Position eines Zielpunkts 20 im Gelände dargestellt. Der Bediener wird solange seine Position im Gelände verändern, bis er eine Übereinstimmung seiner aktuellen Position mit der Markierung 20' im Kamerabild feststellt und dann den Zielpunkt 20 abstecken. - Das erfindungsgemässe Vermessungssystem kann auch gemäss dieser Funktionalität, die sich aus dem Stand der Technik ergibt, durch Wahl einer entsprechenden Bildschirmanzeigen-Option betrieben werden.

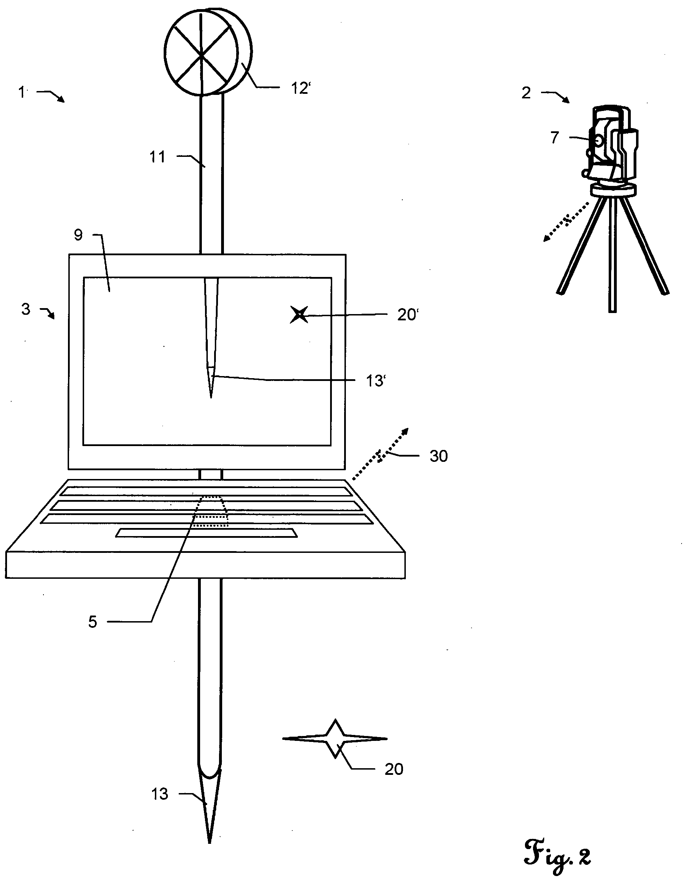

Figur 2 zeigt ein Vermessungssystem gemäss der vorliegenden Erfindung.. Im Gegensatz zum Vermessungssystem gemäss Figur 1 ist die handhaltbare, in dieser Betriebsweise an den Vermessungsstab 11 angesteckte Fernbedieneinheit 3 an ihrer Unterseite mit einer Kamera 5 in definierter Aufnahmerichtung, d.h. in diesem Beispiel in Bodenrichtung, ausgestattet. Die Fernbedieneinheit 3 ist in einer fixen Positionsrelation zu dem auf dem Vermessungsstab 11 aufgesteckten und als Ziel fungierenden Vermessungsreflektor 12' angebracht. Auf dem Display 9 der Fernbedieneinheit 3 ist der Live-Stream der Kamera 5 dargestellt. In der oberen Bildmitte ist die Abbildung 13' des unteren Endes 13 des Vermessungsstabs 11 entsprechend dem Sichtfeld der Kamera 5 zu sehen. In das Kamerabild eingeblendet ist eine Markierung 20', mit der die vorgesehene Position des abzusteckenden Zielpunkts 20 angezeigt wird. Dieses entspricht einer Beispielsituation, bei der die vorgesehene Position des Zielpunkts 20 entsprechend der Markierung 20' sich im Sichtbereich der Kamera 5 befindet. Damit wird die Auffindung und Absteckung des Zielpunkts 20 wesentlich erleichtert und der Absteckungsvorgang beschleunigt, verglichen mit den Möglichkeiten, die sich aus dem Stand der Technik ergeben. Ausserdem kann die Genauigkeit der Zielpunktabsteckung signifikant erhöht und abschliessend auch exakt real dokumentiert werden, da die Kontrolle der Übereinstimmung zwischen vorgesehener Position des Zielpunkts 20 und dessen tatsächlicher Absteckung nicht von einer weit entfernten Kamera, sondern direkt vor Ort von der mit der mobilen Zieleinheit 1 mitgeführten Kamera 5 erfolgt, in deren Blickfeld sich das, in diesem Beispiel als eine Spitze ausgebildete, untere Ende 13 des Vermessungsstabs befindet.

Der Pfeil 30 symbolisiert eine Datenverbindung der Kamera 5 zu einer nicht dargestellten Bildverarbeitungs- und Auswerteeinheit, wie sie von dort auch zu der Positionsbestimmungseinheit 2 besteht. Anhand Kenntnis der definierten Aufnahmerichtung der Kamera 5 sowie der fixen Positionsrelation zwischen der Fernbedieneinheit 3 mit der Kamera 5 und dem auf dem Vermessungsstab 11 aufgesteckten Vermessungsreflektor 12' sowie in Abhängigkeit von der bestimmten aktuellen Zielposition 20' des Vermessungsreflektors 12' werden die Bilddaten der Kamera in einem definierten Koordinatensystem der Positionsbestimmungseinheit 2 in räumlichen Bezug mit dem einen oder mehreren Zielpunkten 20 gebracht.

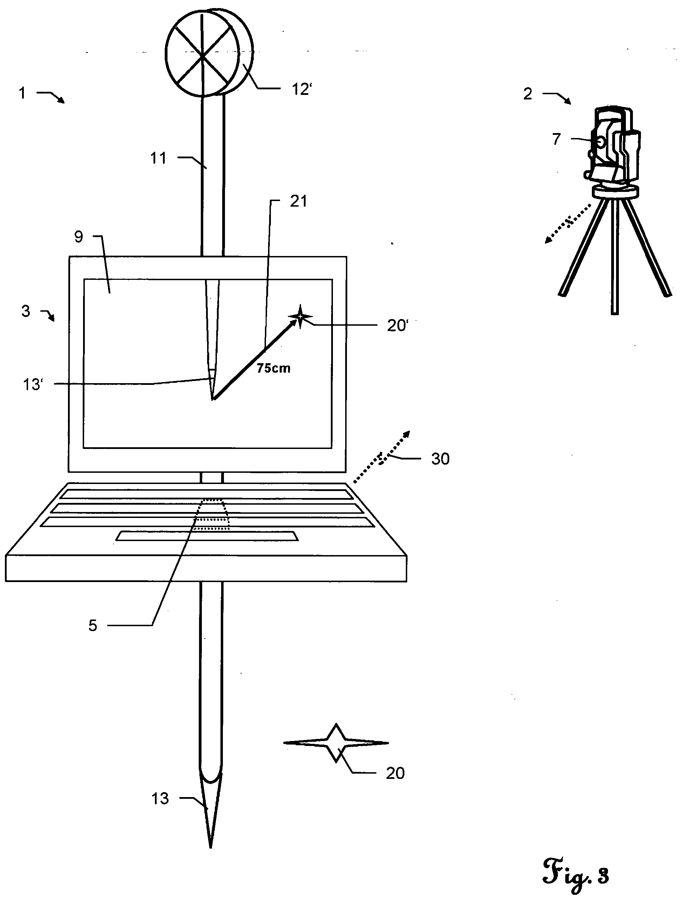

Figur 3 entspricht im Wesentlichen der in Figur 2 dargestellten Anordnung. Zusätzlich ist auf dem Display 9 ein Pfeil 21 dargestellt, mit dem für einen Bediener die Richtung und die Entfernung zur vorgesehenen Position des Zielpunkts 20 gemäss der Markierung 20' angegeben wird. Solange sich die vorgesehene Position eines Zielpunkts 20 ausserhalb des Sichtfelds der Kamera 5 befindet, wird beispielsweise nur ein Richtungspfeil, vorzugsweise zusätzlich mit einer Entfernungsangabe, aber ohne eine eingeblendete Markierung 20' angezeigt.

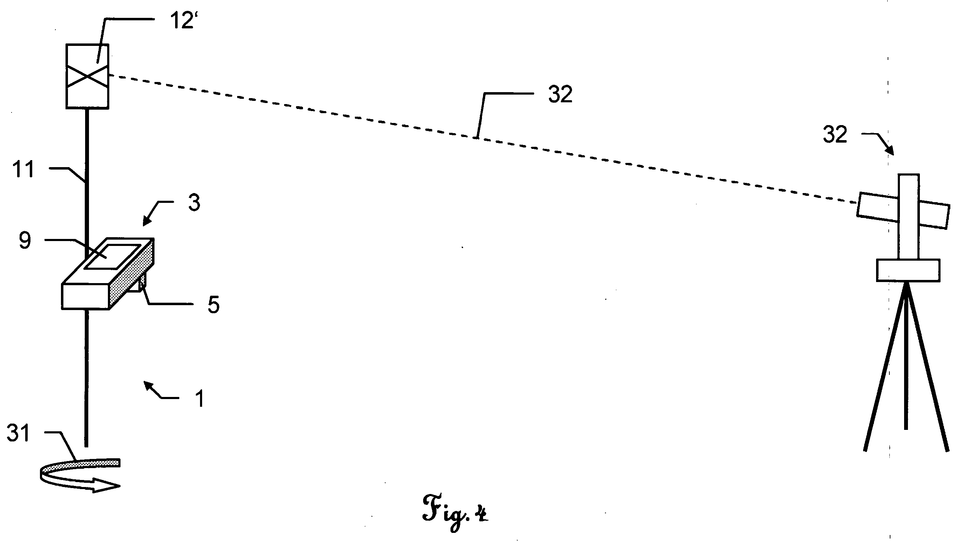

Figur 4 illustriert eine mögliche Ausführungsform eines erfindungsgemässen Vermessungssystems, in dem die Positionsbestimmungseinheit 2 als eine Totalstation ausgebildet ist und die mobile Zieleinheit 1 ein an dem Vermessungsstab 11 angebrachtes Prisma 12' als Ziel umfasst.

Die - insbesondere azimutale - Ausrichtung der Fernbedieneinheit bzw. der zugehörigen Kamera, angedeutet mit dem Pfeil 31, kann beispielsweise mit einem, insbesondere elektronischen, Kompass, der beispielsweise in die Fernbedienheit, den Vermessungsstab oder das Ziel integriert ist, bestimmt werden.

Alternativ kann die (insbesondere azimutale) Ausrichtung der Fernbedieneinheit bzw. der zugehörigen Kamera auch mithilfe von Inertialsensoren, insbesondere Drehratensensoren (Gyroskopen) und/oder Beschleunigungssensoren, bestimmt werden. Insbesondere können die Sensoren dabei auch in eine kompakte Inertialmesseinheit "IMU" (Inertial Measuring Unit) integriert sein.

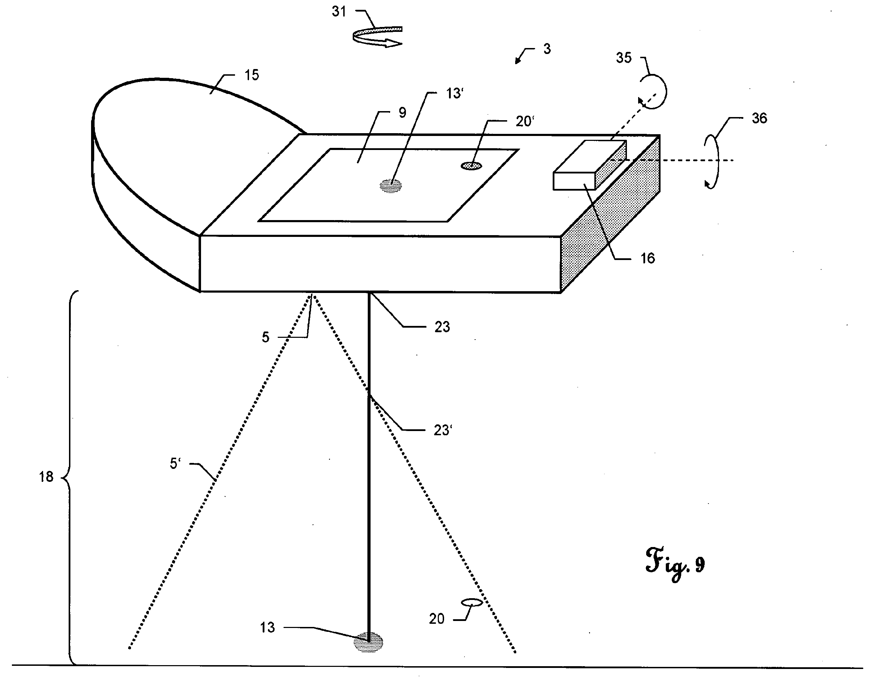

In einer weiteren Ausführungsform kann die azimutale Ausrichtung jedoch auch ohne zusätzliche Sensoren bestimmt werden. Beispielsweise kann anhand einer Kombination der Daten bezüglich des mit der Zieleinheit zurückgelegten Wegs (Bewegungshistorie des Ziels) mit Kameradaten (d.h. Daten hinsichtlich wie (in welche Richtung) sich der aufgenommene Boden während der Fortbewegung der Zieleinheit durch das Kamerabild bewegt) die azimutale Ausrichtung bestimmt werden. Auf diese Methode zur Bestimmung der azimutalen Ausrichtung der Fernbedieneinheit wird ausserdem in Zusammenhang mit Figur 9 nochmals näher eingegangen.

Die durchbrochene Linie 32 deutet die Bestimmung von Richtung und Distanz zwischen der Totalstation 2 und dem Prisma 12' als Ziel der mobilen Zieleinheit 1 an, was mit den bekannten Techniken geodätischer Vermessungssysteme erfolgen kann.

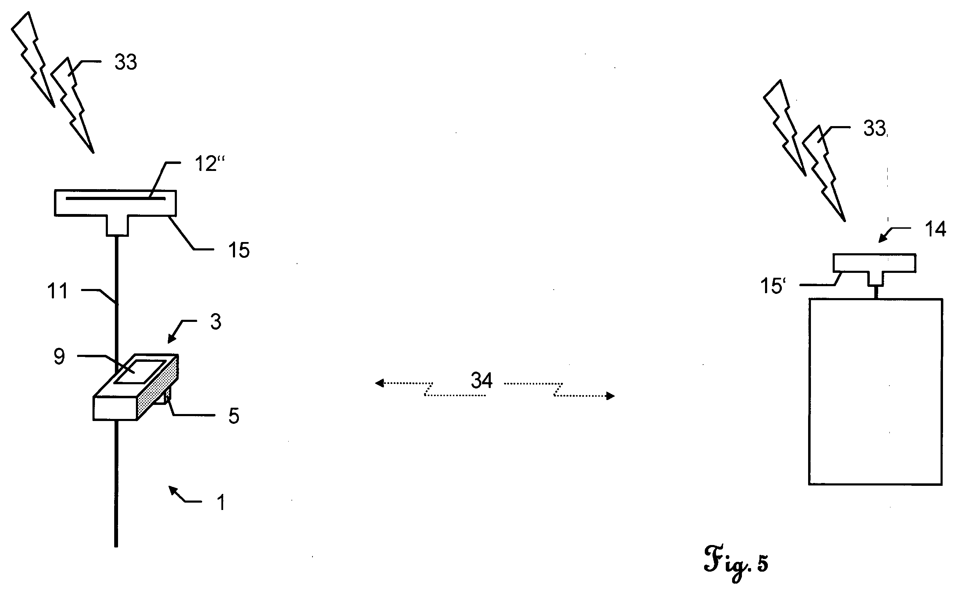

Figur 5 illustriert eine andere mögliche Ausführungsform eines erfindungsgemässen Vermessungssystems, in dem die Zieleinheit 1 die Positionsbestimmungseinheit aufweist, wobei die Positionsbestimmungseinheit als GNSS-Modul 15 ausgebildet ist, in das eine GNSS-Antenne 12'' als Ziel integriert ist, und am Vermessungsstab 11 angebracht ist. Eine fixe Positionsrelation zwischen der Fernbedieneinheit 3 und der GNSS-Antenne 12'' als Ziel der mobilen Zieleinheit 1 wird gewährleistet durch bekannte Abmessungen und Struktur des Vermessungsstabs 11 sowie der Ausbildung der nicht dargestellten Aufnahme für die Fernbedieneinheit, beispielsweise einer vorbestimmten Neigung, wie z.B. 10°, der Fernbedieneinheit gegenüber der Horizontalen. Um die Genauigkeit der durch das GNSS-Modul 15 der Zieleinheit bestimmten Zielposition der GNSS-Antenne 12'' zu erhöhen kann - wie dem in der Geodäsie beheimateten Fachmann bekannt - das GNSS-Modul mit einer Referenzstation 14 in Datenkontakt stehen. Beispielsweise kann dabei die Referenzstation 14 eine Totalstation mit aufgesetztem eigenem GNSS-Modul 15' sein, dessen Position im Feld hochpräzise bekannt oder anderweitig bestimmt ist, sodass die als Referenzstation 14 fungierende Totalstation somit GNSS-Korrekturdaten ableiten und zur Verfügung stellen kann. Die Pfeile 33 deuten dabei vom GNSS-Modul 15 der Zieleinheit 1 und vom GNSS-Modul 15' der Referenzstation 14 zur Positionsbestimmung empfangene GNSS-Satelliten-Signale 33 an, und die Pfeile 34 deuten für GNSS-Korrekturdatenübermittlung sowie gegebenenfalls für zusätzliche Datenübermittlung ausgetauschte Funk-Signale 34 an.

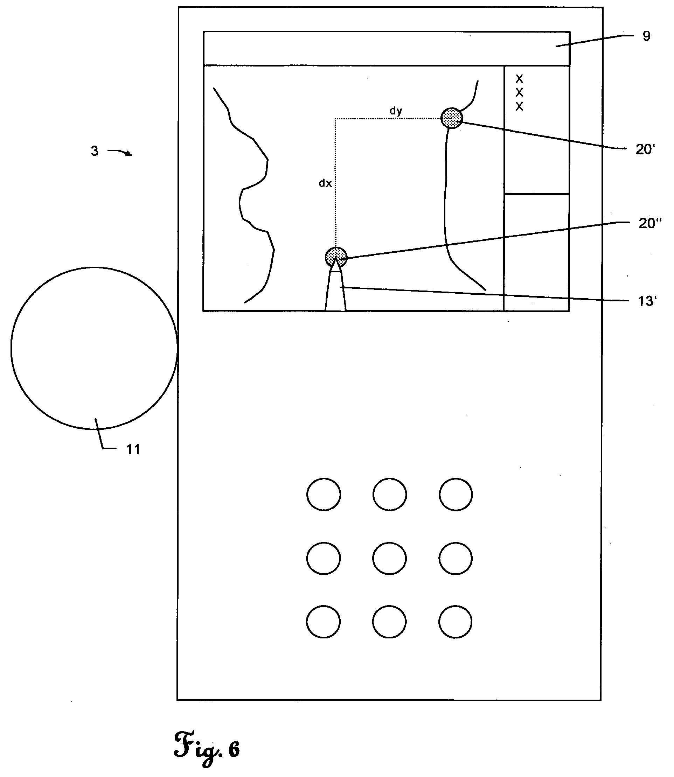

Figur 6 illustriert die Funktionsweise eines erfindungsgemässen Vermessungssystems in einem Einsatz im Feld anhand des Bildes im Display 9 einer erfindungsgemässen Fernbedieneinheit 3. Im Display 9 ist der Live-Stream der Bilder der Kamera 5 dargestellt. Die handhaltbare Fernbedieneinheit 3 ist an den Vermessungsstab 11 angesteckt. Im Live-Stream auf dem Display 9 ist die Abbildung 13' des unteren Endes 13 des Vermessungsstabs 11 durch die Kamera 5 zu sehen, mit Kennzeichnung 20'' von dessen aktueller Position. Des Weiteren ist in das Bild der Kamera 5 die Markierung 20' für die vorgesehene Position zur Absteckung des Zielpunkts eingeblendet. "dx" und "dy" symbolisieren in dieser Darstellung im Koordinatensystem der Positionsbestimmungseinheit 2 oder 2' die Entfernungen zwischen den Positionen 20' und 20''. In einem anderen Betriebsmodus des erfindungsgemässen Systems könnte stattdessen natürlich auch ein Pfeil mit Angabe der Richtung und der direkten Entfernung zwischen den Positionen entsprechend den Markierungen 20'' und 20' angezeigt werden.

Des Weiteren könnten im Display 9 mehrere Live-Streams von verschiedenen Kameras, beispielsweise sowohl von der Kamera 5 der mobilen Zieleinheit 1 als auch einer Kamera (beispielsweise verwendet in der Funktion einer Überblickskamera) als Visiereinrichtung 7 der stationären Positionsbestimmungseinheit 2, bereitgestellt werden.

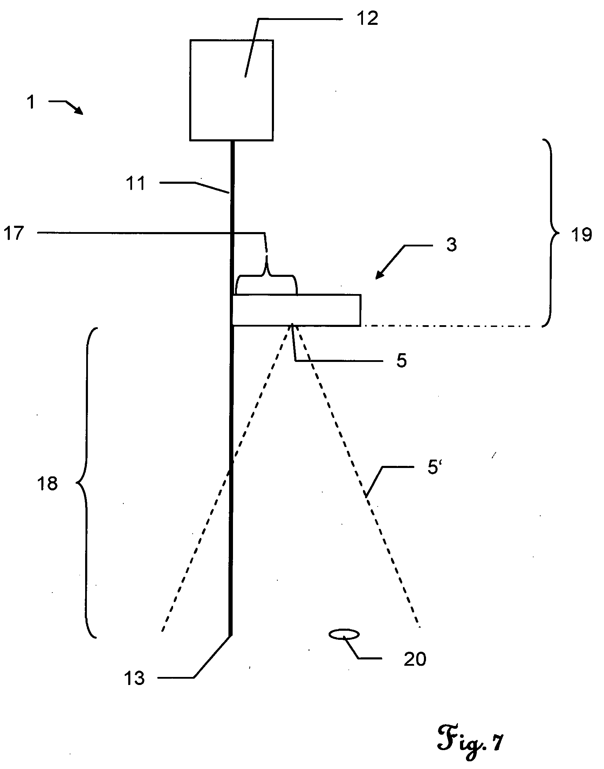

Figur 7 zeigt eine Ausführungsform für eine erfindungsgemässe Zieleinheit 1 für ein Vermessungssystem. Ähnlich wie in Figuren 4 und 5 gezeigt weist die mobile Zieleinheit 1 aus Figur 7 ebenso eine Vermessungsstange 11, an welcher oberen Ends ein Ziel 12 (z.B. ein Reflektor oder eine in ein GNSS-Modul integrierte GNSS-Antenne) angeordnet ist. Ziel 12 und Vermessungsstange 11 können dabei z.B. über einen Schraubverschluss miteinander verbindbar ausgestaltet sein, sodass das Ziel 12 - durch Anschrauben - auf der Stange 11 anbringbar und - durch Abschrauben - wieder von der Stange lösbar ist.

Zudem ist eine Fernbedieneinheit 3 mit elektronischem graphischem Display als Teil der Zieleinheit 1 vorhanden, die an eine - an der Vermessungsstange 11 speziell zum Zweck des positionsstabilen und fixen Ansteckens der Fernbedieneinheit 3 vorgesehene - Halterung befestigbar ist.

Durch eine entsprechende Ausgestaltung der Halterung wird dabei gewährleistet, dass die Fernbedieneinheit 3 mit einer bekannten elevativen Neigung gegenüber der Horizontalen (z.B. mit einer fixen elevativen Neigung zwischen 0° und 15°) am Vermessungsstab 11 angesteckt ist, sodass bei vertikaler Haltung der Vermessungsstange 11 auch die Neigung der Fernbedieneinheit 3 bekannt ist oder aber z.B. anhand eines integrierten Neigungsmessers aktuell jeweils bestimmt werden kann.

Zudem weist die Fernbedieneinheit 3 erfindungsgemäss wiederum eine Kamera 5 auf, wobei z.B. durch Kalibrierung die Sichtrichtung und das Sichtfeld 5' der Kamera 5 vorbestimmt und somit bekannt sind. Die Kamera ist dabei derart z.B. an der Unterseite der Fernbedieneinheit (d.h. jener der Display-Seite gegenüberliegenden Seite der Fernbedieneinheit) angeordnet, dass - im am Vermessungsstab 11 befestigten Zustand der Fernbedieneinheit 3 - das untere Ende 13 (d.h. die Kontaktier-Spitze) des Vermessungsstabs 11 im Sichtfeld 5' liegt.

Die fixe bekannte Stellung (d.h. Positionsrelation) zwischen der Fernbedieneinheit 3 und dem Ziel 12 der mobilen Zieleinheit 1 wird gewährleistet durch bekannte Abmessungen und Struktur des Vermessungsstabs 11 sowie der Ausbildung der nicht dargestellten Halterung für die Fernbedieneinheit 3. Beispielsweise ist der vertikale Abstand 19 vom Ziel 12 zur Kamera 5 der Fernbedieneinheit 3 bekannt sowie der horizontale Abstand der Kamera 5 von der Vermessungsstange 11 (der bei zentraler Befestigung des Ziels 12 auf der Stange 11 auch dem horizontalen Abstand der Kamera 5 vom Ziel 12 entspricht). Alternativ kann - bei bekannter Vermessungsstablänge (d.h. Zielhöhe) - auch die Höhe 18 der Kamera 5 bzw. der Fernbedieneinheit 3 über dem unteren Ende 13 der Vermessungsstange 11 bekannt oder anhand eines in die Fernbedieneinheit 3 integrierten elektronischen Entfernungsmessers (z.B. Laserentfernungsmesser zum Messen des Abstands der Fernbedieneinheit 3 vom Boden) aktuell ermittelt werden und diese Höhe 18 dann von der Vermessungsstablänge subtrahiert werden, um auf die vertikale Beabstandung der Fernbedieneinheit 5 vom Ziel 12 (und somit auf die Positionsrelation von Kamera 5 zu Ziel 12) rückschliessen zu können.

Erfindungsgemäss ist wiederum dabei eine mit einer Positionsbestimmungseinheit (die die Position des Ziels ermittelt) und der Kamera 5 in Datenverbindung stehende Bildverarbeitungs- und Auswerteeinheit vorgesehen, durch die - anhand Kenntnis der fixen Positionsrelation und der definierten Aufnahmerichtung sowie in Abhängigkeit von der bestimmten Zielposition - Bilddaten der Kamera 5 in räumlichen Bezug mit dem abzusteckenden Zielpunkt 20 gebracht werden.

Insbesondere sind dabei die Kamera 5, das Display, die Positionsbestimmungseinheit sowie die Bildverarbeitungs- und Auswerteeinheit derart ausgebildet und wirken derart zusammen, dass in Abhängigkeit von der aktuell bestimmten Zielposition der im Sichtfeld 5' der Kamera 5 befindliche abzusteckende Zielpunkt 20, dessen räumliche Koordinaten bekannt sind, zusammen mit dem Kamerabild im Display anzeigbar sind, insbesondere wobei eine Markierung für den Zielpunkt 20 entsprechend seiner Position im Bild dem Kamerabild überlagert auf dem Display angezeigt wird.

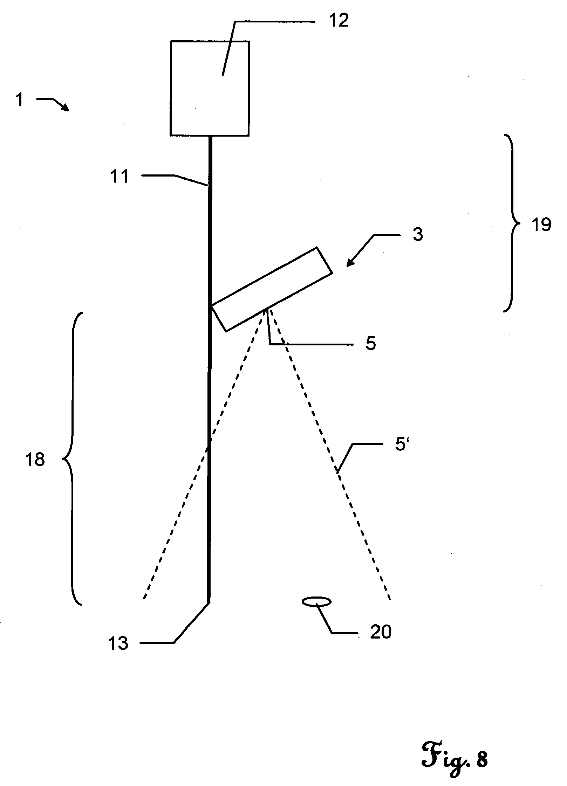

Figur 8 zeigt eine ähnliche Ausführungsform für eine erfindungsgemässe Zieleinheit 1 wie Figur 7. Wie bereits in Figur 7 sind dabei die Kamera 5 und das Display derart an der Fernbedieneinheit 3 angeordnet und ausgerichtet, dass für einen Bediener eine Durchblickmöglichkeit mittels der Kamera 5 auf einen Geländeboden ermöglicht wird. Als einziger Unterschied ist jedoch nun die Kamera derart an der Unterseite der Fernbedieneinheit 3 angeordnet, dass die Flächennormale des Displays um einen Winkel von zwischen 0 und 50°, insbesondere zischen 10 und 45°, im Speziellen etwa 30°, gegenüber der Aufnahmerichtung der Kamera 5 geneigt ausgerichtet ist. Diese Ausführungsvariante ermöglicht eine - gegenüber der Horizontalen - leicht geneigte Anbringung der Fernbedieneinheit am Lotstab, sodass ergonomisch vorteilhaft für den Benutzer das Display leicht ablesbar und die Fernbedieneinheit leicht und komfortabel bedienbar ist.

Zusätzlich kann die Kamera auch variabel ausrichtbar ausgebildet sein, sodass je nach gewähltem Neigungswinkel mit dem die Fernbedieneinheit am Lotstab angebracht ist, auch die Aufnahmerichtung der Kamera derart definiert geneigt werden kann, sodass beispielsweise die Aufnahmerichtung vertikal nach unten zeigt bzw. zumindest sodass gewährleistet ist, dass die untere Spitze des Vermessungsstabs wiederum im Sichtfeld der Kamera liegt.

Figur 9 zeigt eine Ausführungsform für ein erfindungsgemässes Vermessungssystem mit mobiler Zieleinheit ohne notwendigerweise einen Vermessungsstab zu benötigen. Das Vermessungssystem weist dabei eine - in ein kompaktes handhaltbares Gerät 3 integrierte - mobile Zieleinheit zur Absteckung und/oder Positionsbestimmung von Zielpunkten 20 in einem definierten Koordinatensystem auf. In der Zieleinheit sind gemäss dieser Ausführungsform nun folgende Komponenten integriert:
- einem als Positionsbestimmungseinheit ausgebildeten GNSS-Modul 15 mit einer als Ziel ausgebildeten integrierten GNSS-Antenne 12'', zur Bestimmung der Ziel-Position in dem Koordinatensystem,
- einem elektronischen grafischen Display 9,
- eine Kamera 5 zur Aufnahme von einem Kamerabild in einer definierten - in Arbeitsstellung des handhaltbaren Geräts grob vertikal nach unten gerichteten - Aufnahmerichtung,
- einem Sensor 16, insbesondere einem zweiachsigen Neigungsmesser, zur Bestimmung eines Nick- und Rollwinkels 35, 36 des Geräts,
- eine Ausrichtungsbestimmungseinheit zur Bestimmung einer azimutalen Ausrichtung 31 des Geräts, wobei die azimutale Ausrichtung insbesondere einem Gierwinkel des Geräts entspricht, und
- eine derart ausgebildete Bildverarbeitungs- und Auswerteeinheit, dass
   - anhand Kenntnis von sowohl einer fixen Positionsrelation von Kamera 5 relativ zum Ziel als auch der definierten Aufnahmerichtung der Kamera 5 sowie
   - in Abhängigkeit von der aktuell bestimmten Zielposition, den aktuell bestimmten Nick- und Rollwinkeln 35, 36 und der aktuell bestimmten azimutalen Ausrichtung 31
   für ein oder mehrere im Sichtfeld der Kamera 5 befindliche abzusteckende bzw. vermessene Zielpunkte 20, deren räumliche Koordinaten bekannt sind, eine Position im Kamerabild abgeleitet wird und eine Markierung 20' für den einen bzw. die mehreren Zielpunkte 20 entsprechend der Position im Kamerabild diesem überlagert auf dem Display 9 angezeigt werden.

Zur Indizierung der - der aktuellen Zielposition entsprechenden - Bodenposition 13 (was wie vorgängig beschrieben bei Zuhilfenahme eines Vermessungsstabes üblicherweise durch die untere Spitze des Stabes erfolgt) kann in diesem Ausführungsbeispiel nun ein automatisch (insbesondere selbstzentriert oder pendelnd aufgehängter) lotrecht nach unten zeigender Laserpointer 23 vorgesehen sein, der einen der aktuellen Zielposition entsprechenden sichtbaren Laserspot 13 auf den Boden anhand des Laserstrahls 23' projiziert. Der Laserpointer 23 kann im Speziellen somit also als Vermessungsstab-Ersatz dienen und wird auch als heller Punkt am Boden von der Kamera erfasst und ist im Kamerabild als Spot 13' erkennbar.

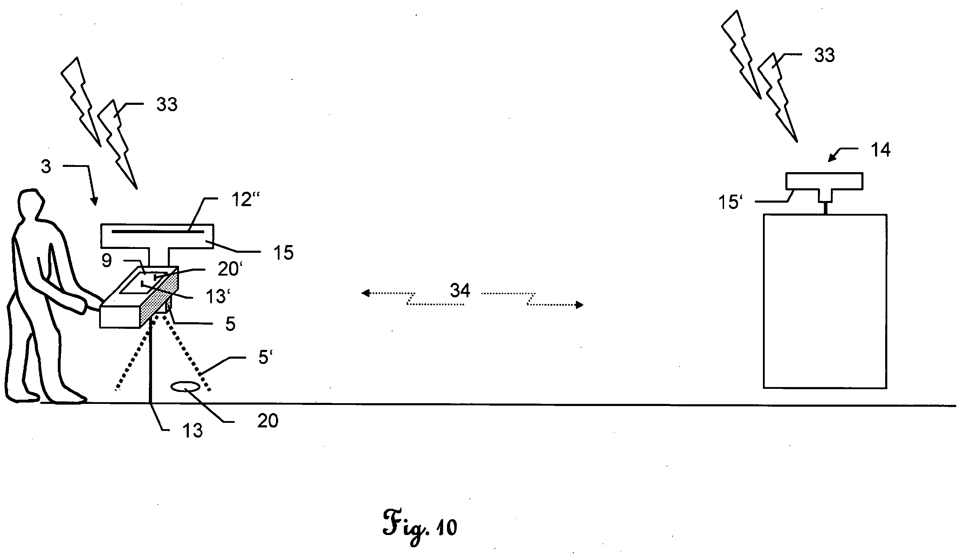

Der Benutzer kann - wie im dargestellten Anwendungsfall in Figur 10 ersichtlich - nun zur Absteckung des Zielpunkts 20 auf einfache Weise die mobile Zieleinheit derart verrücken und fortbewegen, dass die Markierung 20' mit dem auf den Boden projizierten und im Kamerabild ersichtlichen Laserspot 13' zur Deckung kommt. Genau der gesuchte Zielpunkt wird in dieser End-Stellung dann letztendlich vom Laserspot am Boden angezeigt und kann abgesteckt werden.

Ist dabei der Laserpointer zudem als EDM-Modul (EDM = electronic distance measurement) - d.h. ausgestattet mit elektronischer Distanzmessfunktionalität - ausgebildet (wofür z.B. ein geeigneter Empfänger für am Untergrund reflektierte Strahlung vorgesehen sein kann), kann zudem die aktuelle Höhe 18 des mobilen Geräts über dem Untergrund bestimmt werden. Diese derart bestimmte Höhe 18 des Geräts über dem Boden entspricht bei den in den vorgängigen Figuren gezeigten Ausführungsbeispielen der bekannten Länge des Vermessungsstabs, anhand welcher in den vorgängigen Beispielen ein Wert für die Höhe des Ziels über dem Boden ableitbar ist.

Die - insbesondere azimutale - Ausrichtung des Geräts bzw. der zugehörigen Kamera 5, angedeutet mit dem Pfeil 31, kann beispielsweise mit einem, insbesondere elektronischen, Kompass, der beispielsweise in das Gerät integriert ist, bestimmt werden.

Alternativ kann die azimutale Ausrichtung des Geräts bzw. der zugehörigen Kamera auch mithilfe von Inertialsensoren (die zudem auch relative Nick- und Rollwinkel des Geräts bestimmbar machen können), wie insbesondere Drehratensensoren (Gyroskopen) und/oder Beschleunigungssensoren, bestimmt werden. Insbesondere können die Sensoren dabei auch in eine kompakte Inertialmesseinheit "IMU" (Inertial Measuring Unit) integriert sein.

Jedoch kann die azimutale Ausrichtung auch ohne zusätzliche neigungs- oder drehratenmessende Sensoren bestimmt werden. Beispielsweise kann anhand einer Kombination von den Daten bezüglich des mit der Zieleinheit zurückgelegten Wegs (Bewegungshistorie des Ziels) mit Daten, die aus einer Folge von während der Fortbewegung mit dem handgehaltenen Gerät von der überstrichenen Untergrundoberfläche erfassten Kamerabilder abgeleitet werden (z.B. Daten hinsichtlich in welcher Richtung sich der aufgenommene Boden während der Fortbewegung der Zieleinheit durch das Kamerabild bewegt), die azimutale Ausrichtung bestimmt werden.

Dazu werden in der Kamerabildfolge die sich zeitlich ändernden Oberflächeninformationen verfolgt und anhand der relativen Änderungen (z.B. erkante Verrückungen von identifizierten Merkmalen) der Untergrundoberfläche in aufeinander folgenden Aufnahmen der Bildfolge die Bewegungsrichtung der Kamera gegenüber dem Untergrund ermittelt.

Zur Aufnahme der Kamerabildfolge kann dabei die Kamera die Oberfläche des Untergrundes wiederholt erfassen. Das wiederholte Erfassen erfolgt dabei insbesondere in kurzen zeitlichen Abständen, wie in einem Takt von z.B. alle 10ms - 100ms. Durch die Auswertekomponente werden nun anhand einer Bilderkennung sich durch die Fortbewegung der Kamera von Kamerabild zu Kamerabild der Bildfolge verschiebende Oberflächenmerkmale verfolgt. Dabei repräsentiert eine Verschiebung und/oder Verdrehung eines erkannten Merkmals bei zwei aufeinander folgenden Aufnahmen die vollzogene Bewegung der Kamera gegenüber dem Untergrund. Diese Bewegung wird auch von dem Gerät ausgeführt, da die Kamera direkt am Gerät angebracht ist. So wird fortlaufend die Bewegungsrichtung des handgehaltenen Geräts bestimmt und kontrolliert.

Demzufolge kann also die Auswertekomponente aus den Bildinformationen der Kamera die Bewegungsrichtung des Geräts relativ zum Untergrund ermitteln.

Um die Erkennung und Zuordnung von Oberflächenmerkmalen des Untergrundes bei den einzelnen Aufnahmen zu verbessern und dadurch die Bewegungsrichtung relativ zum Untergrund präziser zu ermitteln, ist ein Anleuchten bzw. Aufhellen der zu erfassenden Untergrundoberfläche möglich. Dieses Anleuchten kann in unterschiedlicher Art und Weise erfolgen, beispielsweise mit Strahlung in einem speziellen Spektralbereich oder mit einem auf die zu erfassende Untergrundstruktur projizierten Strahlmuster (z.B. anhand des Laserpointers 23). Ebenso kann der Untergrund auch hinsichtlich dessen Abstrahlcharakteristik der reflektierten Strahlung, z.B. hinsichtlich der Farben der Untergrundoberfläche, analysiert werden und diese Information zur Bestimmung einer Verrückung/Verdrehung von erkannten Merkmalen in einer Folge von erfassten Kamerabilder zusätzlich herangezogen werden.

Zusammengefasst ist zur Bestimmung einer relativen azimutalen Ausrichtung (bzw. einer Ausrichtungsänderung) des Geräts gegenüber dem Untergrund die Kamera zur fortlaufenden Erfassung der Untergrundoberfläche ausgebildet, insbesondere mit einer Wiederholrate von zwischen 10Hz und 100Hz, wobei zwischen dabei erzeugten Aufnahmen der Untergrundoberfläche die Zieleinheit weiterbewegt wird, und die Auswertekomponente durch Vergleich der Aufnahmen zur Erkennung einer Verrückung eines erkannten Strukturmerkmals der aufgenommenen Untergrundoberfläche ausgebildet ist und daraus die relative Bewegungsrichtung bzw. azimutale Ausrichtungsänderungen der Kamera gegenüber dem Untergrund ermittelt wird.

Beispielsweise kann die Auswertekomponente aus den Informationen der Kamerabildfolge zudem auch die relative Bewegungsgeschwindigkeit und den zurückgelegten Weg der Kamera bzw. der mobilen Zieleinheit relativ zum Untergrund ermitteln und Informationen über die Bewegungsrichtung und/oder die Bewegungsgeschwindigkeit und/oder den zurückgelegten Weg speichern.

Wird nun zu dieser derart bestimmten azimutalen relativen Ausrichtung (bzw. Ausrichtungsänderung) der mobilen Zieleinheit gegenüber dem Untergrund noch der während der Aufnahme der Kamerabildfolge der - anhand des GNSS-Moduls im definierten (absoluten) Koordinatensystem bestimmte - zurückgelegte Weg der mobilen Zieleinheit mitberücksichtigt, so kann auf die absolute azimutale Ausrichtung der Zieleinheit (auch im Koordinatensystem des GNSS) geschlossen werden.

D.h. durch Verheiratung der relativ und der absolut bestimmten Informationen (d.h. die bestimmten relativen Ausrichtungsänderungen der Zieleinheit mit dem anhand GNSS ermittelten dabei zurückgelegten Weg) kann auf die absolute azimutale Ausrichtung der Zieleinheit im definierten (äusseren) Koordinatensystem geschlossen werden.

Ist diese absolute azimutale Ausrichtung der Zieleinheit einmalig ermittelt und bekannt, so genügt im Folgenden theoretisch die relative Ausrichtung forthin aus der Kamerabildfolge zu bestimmen, um weiterhin fortlaufend Kenntnis von der absoluten azimutalen Ausrichtung zu behalten.

Da sich dabei Fehler jedoch kumulieren, kann in bestimmten Zeitabständen oder nach bestimmten Ereignissen (z.B. alle 1 bis 20 Sekunden oder nach besonders ruckartig vollzogenen Bewegungen der mobilen Zieleinheit, die z.B. auch durch Heranziehung der Kamerabildfolge erkannt werden können) eine Überprüfung und/oder Neuberechnung der absoluten Ausrichtung erfolgen, insbesondere wiederum durch Verheiratung der relativ (Kamerabildfolge) und der absolut (GNSS) erfassten Informationen, wie oben beschrieben.

Abgesehen von der erfindungsgemässen Verwendung der so bestimmten absoluten azimutalen Ausrichtung der Zieleinheit (nämlich zur Ermittlung einer entsprechenden Kamerabild-Position des gesuchten/abzusteckenden Zielpunkts im Kamerabild und zur Einblendung einer Markierung für den abzusteckenden Zielpunkt im Kamerabild) kann gemäss eines weiteren erfinderischen Aspekts die so bestimmte absolute azimutale Ausrichtung der mobilen Zieleinheit auch zur Guidance des Benutzers hin zu abzusteckenden Punkten verwendet werden, auch solange sich der gesuchte/abzusteckende Zielpunkt noch nicht im Sichtfeld der Kamera befindet. Beispielsweise kann dann im Display des Geräts ein in Richtung des Absteckpunktes zeigender Pfeil, dessen Richtung sich abhängig von der aktuellen azimutalen Ausrichtung des Zielgeräts anpasst, zum Hinführen des Benutzers angezeigt werden oder entsprechende richtungsweisende Sprachausgaben - abhängig von der aktuellen azimutalen Ausrichtung des Zielgeräts - erfolgen.

Diese Art von Guidance ist im Prinzip aus dem Stand der Technik bereits bekannt. Da jedoch bisher die aktuelle azimutale Ausrichtung lediglich aus dem zuletzt zurückgelegten Weg der mobilen Zieleinheit (unter der Annahme, dass das Gerät nicht im Hundegang bewegt wird) - also aus der Bewegungshistorie - berechnet wird, können reine azimutale Ausrichtungsänderungen, die im Wesentlichen ohne weitere Fortbewegung der Zieleinheit erfolgen, nicht berücksichtigt werden. Dies führt dann oft zu sich sprungartig ändernden Guidance-Anweisungen (z.B. ein sich sprungartig drehender Richtungspfeil im Display) und somit zur Fehlleitung des Benutzers im Rahmen der Guidance-Funktion. Zudem kann auch bei sehr langsamer Fortbewegung die aktuelle azimutale Ausrichtung nur sehr unzuverlässig bestimmt werden (da dann oft eine Fortbewegung der handgehaltenen Zieleinheit im Hundegang erfolgt), was auch zu entsprechenden Fehlleitungen des Benutzers im Rahmen der Guidance-Funktion führen kann.

Durch das Miteinbeziehen und Verwenden der aktuell und mit hoher Rate erfindungsgemäss aus der Kamerabildfolge bestimmbaren relativen Bewegungsrichtung und relativen Ausrichtungsänderungen der handgehaltenen Zieleinheit gegenüber dem Untergrund kann dieser Nachteil deutlich verringert und die für die Guidance-Funktion herangezogene absolute azimutale Ausrichtung deutlich zuverlässiger bestimmt werden. Die nach unten (d.h. auf den überstrichenen Untergrund) schauende Kamera der mobilen Zieleinheit erfüllt in diesem Fall eine ähnliche Funktion wie eine optische Computermaus.

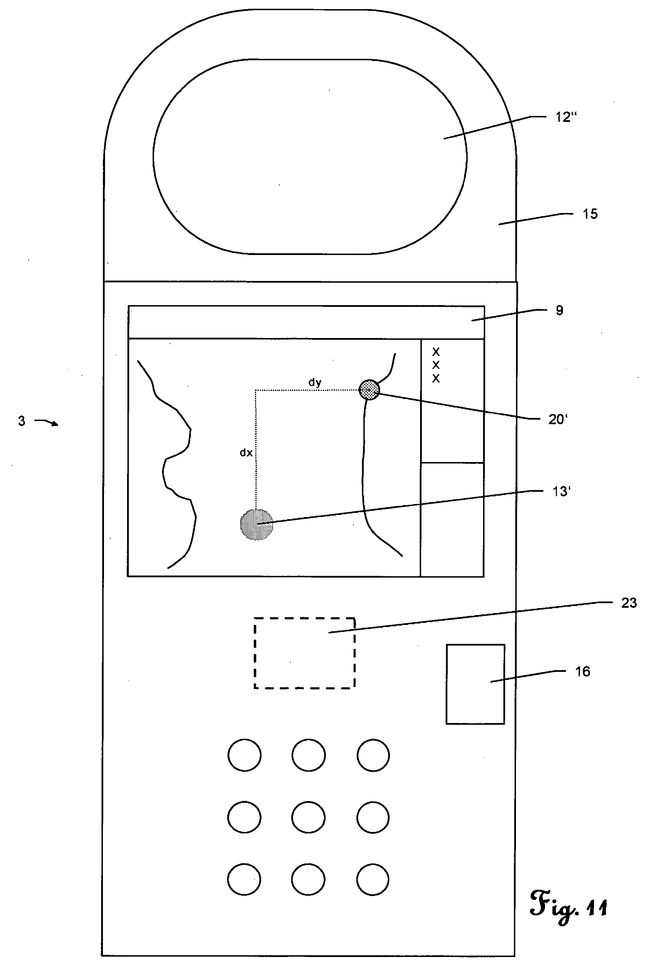

Wie in Figur 11 gezeigt können wiederum zur hochpräzisen (also mit geodätischer Genauigkeit erfolgenden) Bestimmung der GNSS-Position des Ziels (d.h. der GNSS-Antenne und somit auch der mobilen Zieleinheit) GNSS-Korrekturdaten herangezogen werden, die seitens einer Referenzstation abgeleitet und generiert werden und dann z.B. per Funk ausgesendet und seitens der mobilen Zieleinheit empfangen werden können.

Das die Komponenten der Zieleinheit integrierende handhaltbare Gerät 3 kann dabei zudem mit Fernbedienfunktionalität für die Referenzstation (z.B. eine Totalstation mit aufgesetztem GNSS-Modul) und somit auch als Fernbedieneinheit/Datenlogger für eine Totalstation ausgebildet sein.

Figur 11 zeigt eine Draufsicht der erfindungsgemässen und bereits in Zusammenhang mit Figur 10 beschriebenen mobilen Zieleinheit mit GNSS-Modul 15, wobei sämtliche Komponenten der mobilen Zieleinheit in einem handhaltbaren Gerät 3 integriert sind. In das GNSS-Modul 15 ist dabei wiederum eine GNSS-Antenne 12" integriert.

Zudem sind ein elektronisches grafisches Display 9, eine an der Unterseite befindliche Kamera, ein Sensor 16 zur Bestimmung eines Nick- und Rollwinkels des Geräts sowie ein automatisch (insbesondere selbstzentriert oder pendelnd aufgehängter) lotrecht nach unten zeigender Laserpointer 23 vorhanden.

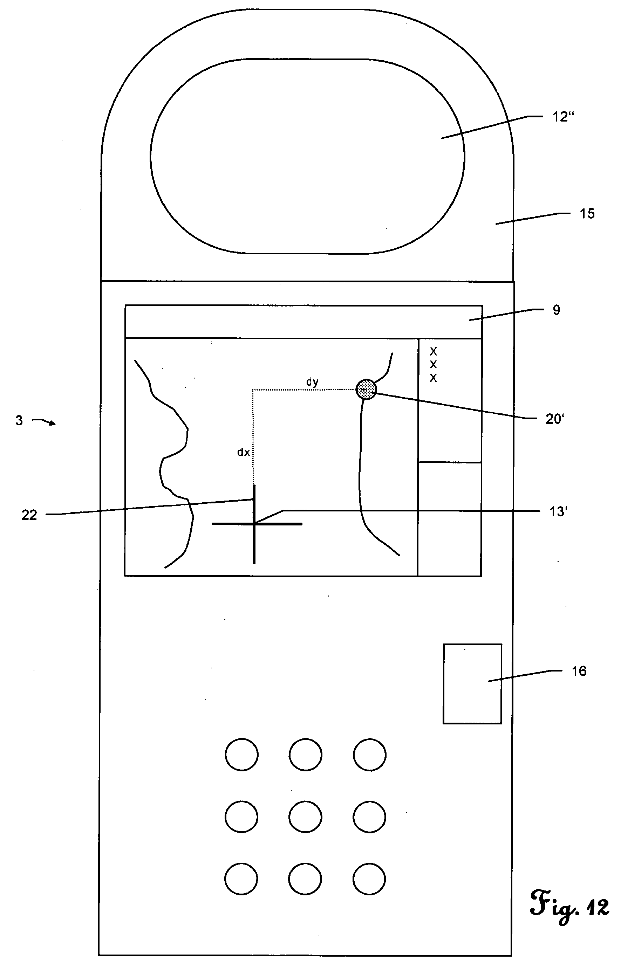

Erfindungsgemäss werden - wie im in Figur 12 dargestellten Display 9 ersichtlich - durch die Bildverarbeitungs- und Auswerteeinheit
- anhand Kenntnis von sowohl einer fixen Positionsrelation von Kamera 5 relativ zum Ziel (d.h. der GNSS-Antenne 12'') als auch der definierten Aufnahmerichtung der Kamera
sowie
- in Abhängigkeit von der aktuell bestimmten Zielposition, den aktuell bestimmten Nick- und Rollwinkeln und der aktuell bestimmten azimutalen Ausrichtung
für ein oder mehrere im Sichtfeld der Kamera 5 befindliche abzusteckende bzw. vermessene Zielpunkte, deren räumliche Koordinaten bekannt sind, eine Position im Kamerabild abgeleitet und eine Markierung 20' für den einen bzw. die mehreren Zielpunkte entsprechend der Position im Kamerabild erzeugt und dem Kamerabild überlagert auf dem Display 9 angezeigt.

Die Indizierung der - der aktuellen GNSS-Antennen-Position entsprechenden - Bodenposition erfolgt durch den Laserpointer 23, der dafür einen automatisch lotrecht nach unter gerichteten Laserstrahl aussendet und somit auf den Boden einen Laserspot projiziert. Dieser auf den Boden projizierte Laserspot wird auch von der Kamera erfasst und ist als solcher 13' im auf dem Display 9 dargestellten Kamerabild ersichtlich.

Der Benutzer kann - wie im dargestellten Anwendungsfall in Figur 10 ersichtlich - nun zur Absteckung des Zielpunkts auf einfache Weise die mobile Zieleinheit derart verrücken und fortbewegen, dass die dem Kamerabild entsprechend der gesuchten Zielpunkt-Position überlagerte Zielpunkt-Markierung 20' mit dem auf den Boden projizierten und im Kamerabild ersichtlichen Laserspot 13' zur Deckung kommt.

Alternativ zur in Figuren 9 bis 11 gezeigten Indizierung der - der aktuellen GNSS-Antennen-Position entsprechenden - Bodenposition durch einen Laserpointer kann wie in Figur 12 gezeigt auch eine Markierung wie ein Fadenkreuz 22 an der - der aktuellen GNSS-Antennen-Position entsprechenden - Bodenposition 13' dem Kamerabild überlagert eingeblendet sein.

Vorteilhaft werden dabei zur entsprechenden Einblendung des Fadenkreuzes 22 an jener Bodenposition 13', die sich durch senkrechte Projektion der GNSS-Antennen-Position auf den Boden ergibt, auch die aktuellem durch des Sensor 16 bestimmten Nick- und Rollwinkel des Geräts 3 berücksichtigt.

Wird das Gerät leicht geneigt gehalten und ist daher der lotrecht unter der GNSS-Antenne liegende Bodenpunkt eher am unteren Rand im Kamerabild abgebildet, so wird auch das Fadenkreuz entsprechend zur Indikation dieses der aktuellen GNSS-Antennen-Position entsprechenden Bodenpunkts im Kamerabild am unteren Rand eingeblendet und dem im Display 9 angezeigten Kamerabild entsprechend überlagert.

Je nach aktuellen Nick- und Rollwinkel des Geräts 3 (d.h., je nach dem wie der Benutzer das Gerät aktuell in den Händen hält) kann dann "live" und fortlaufend die Position des Fadenkreuzes 22 im Kamerabild derart angepasst und nachgeführt werden, dass das Fadenkreuz stets jenen Bodenpunkt 13' indiziert, der sich lotrecht direkt unterhalb der GNSS-Antenne (oder einem anderen definierten Bezugspunkt des Geräts) befindet.

Der Benutzer kann - ähnlich wie bei realer Erzeugung eines den Bodenpunkt 13' indizierenden Laserspots am Boden gemäss der Ausführungsform aus Figuren 9 bis 11 - nun wiederum zur Absteckung des Zielpunkts auf einfache Weise die mobile Zieleinheit derart verrücken und fortbewegen, dass die dem Kamerabild entsprechend der gesuchten Zielpunkt-Position überlagerte Zielpunkt-Markierung 20' sich im Zentrum des eingeblendeten Fadenkreuzes 22 befindet.

Nach Erreichen dieser End-Stellung hält der Benutzer das Gerät 3 dann genau lotrecht über dem gesuchten abzusteckenden Zielpunkt.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Vermessungssystem mit einer Positionsbestimmungseinheit (2, 2'), insbesondere einer Totalstation oder einem GNSS-Modul, zur Bestimmung einer Zielposition in einem definierten Koordinatensystem, und mit einer mobilen Zieleinheit (1) zur Absteckung und/oder Positionsbestimmung von Zielpunkten (20) in dem Koordinatensystem, wobei die Zieleinheit (1) aufweist
• einen Vermessungsstab (11), dessen unteres Ende in Zielpunktkontakt bringbar ist,
• ein auf dem Vermessungsstab (11) anbringbares Ziel (12, 12', 12"), dessen Zielposition hochpräzise bestimmbar ist, insbesondere wobei das Ziel (12, 12', 12") als ein anhand einer Totalstation (2) anmessbarer Vermessungsreflektor (12') oder als eine mit dem GNSS-Modul der Positionsbestimmungseinheit (2') in Datenverbindung stehende GNSS-Antenne (12'') ausgebildet ist,
• eine handhaltbare Fernbedieneinheit (3) für das Vermessungssystem, wobei die Fernbedieneinheit (3) ein elektronisches grafisches Display (9) aufweist und derart an einer Aufnahme des Vermessungsstabs (11) ansteckbar ist, dass sich die Fernbedieneinheit (3) - im angesteckten Zustand - in fixer Positionsrelation zu dem auf dem Vermessungsstab (11) angebrachten Ziel (12, 12', 12") befindet,
**dadurch gekennzeichnet, dass**
• die Fernbedieneinheit (3) eine Kamera (5) zur Aufnahme von einem Kamerabild in einer definierten Aufnahmerichtung aufweist, und
• eine mit der Positionsbestimmungseinheit (2, 2') und der Kamera (5) in Datenverbindung stehende Bildverarbeitungs- und Auswerteeinheit vorgesehen ist, durch die - anhand Kenntnis der fixen Positionsrelation und der definierten Aufnahmerichtung sowie in Abhängigkeit von der bestimmten Zielposition - Bilddaten der Kamera (5) in dem Koordinatensystem in räumlichen Bezug mit den Zielpunkten (20) bringbar sind.

2. Vermessungssystem nach Anspruch 1,
**dadurch gekennzeichnet, dass**
die Kamera (5), das Display (9), die Positionsbestimmungseinheit (2, 2') sowie die Bildverarbeitungs- und Auswerteeinheit derart ausgebildet sind und derart zusammenwirken, dass in Abhängigkeit von der aktuell bestimmten Zielposition für ein oder mehrere im Sichtfeld der Kamera (5) befindliche abzusteckende bzw. vermessende Zielpunkte (20), deren räumliche Koordinaten bekannt sind, eine Zielpunkt-Position im Kamerabild ableitbar ist und eine Markierung (20') für den einen bzw. die mehreren Zielpunkte (20) entsprechend der Zielpunkt-Position im Kamerabild diesem überlagert auf dem Display (9) anzeigbar sind.

3. Vermessungssystem nach einem der Ansprüche 1 oder 2,
**dadurch gekennzeichnet, dass**
die Bildverarbeitungs- und Auswerteeinheit derart konfiguriert ist, dass zur Ableitung der Zielpunkt-Positionen im Kamerabild ein digitales Geländemodel herangezogen und mitberücksichtigt wird, insbesondere wobei ein Sensor zur Erfassung eines digitalen Geländemodells des im Sichtfeld der Kamera befindlichen Geländes - im Speziellen ein RIM-Sensor oder ein Stereophotogrammetrie-Modul - vorgesehen ist.

4. Vermessungssystem nach einem der Ansprüche 1 bis 3,
**dadurch gekennzeichnet, dass**
die Kamera (5), das Display (9), die Positionsbestimmungseinheit (2, 2') sowie die Bildverarbeitungs- und Auswerteeinheit derart ausgebildet sind und derart zusammenwirken, dass eine durch die Kamera (5) aufgenommene Filmsequenz live am Display (9) anzeigbar ist und dabei - der angezeigten Filmsequenz überlagert - in Abhängigkeit von der aktuell bestimmten Zielposition ein oder mehrere abzusteckende bzw. vermessene Zielpunkte (20), deren räumliche Koordinaten bekannt sind, im Kamerabild markiert und auf dem Display (9) anzeigbar sind.

5. Vermessungssystem nach einem der Ansprüche 1 bis 4,
**dadurch gekennzeichnet, dass**
die Kamera (5) und das Display (9) derart an der Fernbedieneinheit (3) angeordnet und ausgerichtet sind, dass für einen Bediener eine Durchblickmöglichkeit mittels der Kamera (5) auf einen Geländeboden ermöglicht wird, wobei entweder
• die Flächennormale des Displays (9) im Wesentlichen parallel zur Aufnahmerichtung der Kamera ausgerichtet ist, insbesondere wobei die optischen Achsen des Displays (9) und der Kamera (5) im Wesentlichen koaxial - jedoch die Blickrichtungen entgegengesetzt zueinander - ausgerichtet sind, oder
• die Flächennormale des Displays (9) um einen Winkel von zwischen 10 und 45°, insbesondere 30°, gegenüber der Aufnahmerichtung der Kamera geneigt ausgerichtet ist,
und insbesondere wobei die Kamera (5) derart ausgerichtet ist, dass - im an den Vermessungsstab (11) angesteckten Zustand der Fernbedieneinheit (3) - das untere Ende (13) des Vermessungsstabs (11) im Sichtfeld der Kamera (5) liegt.

6. Vermessungssystem nach einem der Ansprüche 1 bis 5,
**dadurch gekennzeichnet, dass**
- im an den Vermessungsstab (11) angesteckten Zustand der Fernbedieneinheit (3) - durch die Struktur des Vermessungsstabs (11) die fixe Positionsrelation von der Fernbedieneinheit (3) relativ zum angebrachten Ziel (12, 12', 12'') gewährleistet wird, insbesondere wobei anhand mindestens einer der folgenden Mittel die fixe Positionsrelation der Bildverarbeitungs- und Auswerteeinheit verfügbar gemacht wird:
• Speichermittel, worin die fixe Positionsrelation abgespeichert ist,
• Positionsrelation-Bestimmungsmittel, die einen aktuellen Abstand von der Fernbedieneinheit (3) zum Ziel (12, 12', 12") und/oder eine aktuelle Ausrichtung, insbesondere die azimutale und/oder elevative Ausrichtung, der Fernbedieneinheit (3) bestimmbar machen, im Speziellen wobei die Positionsrelation-Bestimmungsmittel einen Abstandssensor und/oder einen in die Fernbedieneinheit (3) integrierten Kompass und/oder einen in die Fernbedieneinheit (3) integrierten Neigungssensor aufweisen,
• Eingabemittel, sodass Daten bezüglich der fixen Positionsrelation von einem Benutzer eingebbar sind,
• ein an dem Vermessungsstab (11), insbesondere der Aufnahme, elektronisch oder graphisch abgelegter Datensatz, der Informationen bezüglich der durch den Vermessungsstab (11) gewährleisteten fixen Positionsrelation umfasst, und einem in der Fernbedieneinheit (3) vorgesehenen Auslesemittel, sodass der Datensatz fernbedieneinheitsseitig auslesbar ist.

7. Mobile Zieleinheit (1) für ein Vermessungssystem nach einem der vorangehenden Ansprüche mit
• einem Vermessungsstab (11), dessen unteres Ende (13) in Zielpunktkontakt bringbar ist,
• einem auf dem Vermessungsstab (11) anbringbaren Ziel (12, 12', 12"), dessen Zielposition hochpräzise bestimmbar ist, insbesondere wobei das Ziel (12, 12', 12") als ein anhand einer Totalstation (2) anmessbarer Vermessungsreflektor (12') oder als eine mit dem GNSS-Modul der Positionsbestimmungseinheit (2') in Datenverbindung stehende GNSS-Antenne (12') ausgebildet ist,
• einer handhaltbaren Fernbedieneinheit (3) für das Vermessungssystem, wobei die Fernbedieneinheit (3) ein elektronisches grafisches Display (9) aufweist und derart an einer Aufnahme des Vermessungsstabs (11) ansteckbar ist, dass sich die Fernbedieneinheit (3) - im angesteckten Zustand - in fixer Positionsrelation zu dem auf dem Vermessungsstab (11) angebrachten Ziel (12, 12', 12") befindet,
**dadurch gekennzeichnet, dass**
• die Fernbedieneinheit (3) eine Kamera (5) zur Aufnahme von einem Kamerabild in definierter Aufnahmerichtung aufweist, und
• eine mit der Positionsbestimmungseinheit (2, 2') und der Kamera (5) in Datenverbindung stehende Bildverarbeitungs- und Auswerteeinheit vorgesehen ist, durch die - anhand Kenntnis der fixen Positionsrelation und der definierten Aufnahmerichtung sowie in Abhängigkeit von der bestimmten Zielposition - Bilddaten der Kamera (5) in dem Koordinatensystem in räumlichen Bezug mit den Zielpunkten (20) bringbar sind.

8. Mobile Zieleinheit (1) nach Anspruch 7,
**dadurch gekennzeichnet, dass**
die Kamera (5) und das Display (9) derart an der Fernbedieneinheit (3) angeordnet und ausgerichtet sind, dass für einen Bediener eine Durchblickmöglichkeit mittels der Kamera (5) auf einen Geländeboden ermöglicht ist, wobei die Flächennormale des Displays (9) im Wesentlichen parallel zur Aufnahmerichtung der Kamera (5) ausgerichtet ist, insbesondere wobei die optischen Achsen des Displays (9) und der Kamera (5) im Wesentlichen koaxial - jedoch die Blickrichtungen entgegengesetzt zueinander - ausgerichtet sind.

9. Mobile Zieleinheit (1) nach Anspruch 7 oder Anspruch 8,
**dadurch gekennzeichnet, dass**
die Kamera (5) derart ausgerichtet ist, dass - im an den Vermessungsstab (11) angesteckten Zustand der Fernbedieneinheit (3) - das untere Ende (13) des Vermessungsstabs (11) im Sichtfeld der Kamera (5) liegt.

10. Mobile Zieleinheit nach einem der Ansprüche 7 bis 9,
**dadurch gekennzeichnet, dass**
- im an den Vermessungsstab (11) angesteckten Zustand der Fernbedieneinheit (3) - durch die Struktur des Vermessungsstabs (11) die fixe Positionsrelation von der Fernbedieneinheit (3) relativ zum angebrachten Ziel (12, 12', 12") gewährleistet ist, wobei anhand mindestens einer der folgenden Mittel die fixe Positionsrelation der Bildverarbeitungs- und Auswerteeinheit verfügbar gemacht wird:
• Speichermittel, worin die fixe Positionsrelation abgespeichert ist,
• Positionsrelation-Bestimmungsmittel, die einen aktuellen Abstand von der Fernbedieneinheit (3) zum Ziel (12, 12', 12'') und/oder eine aktuelle Ausrichtung, insbesondere die azimutale und/oder elevative Ausrichtung, der Fernbedieneinheit (3) bestimmbar machen, im Speziellen wobei die Positionsrelation-Bestimmungsmittel einen Abstandssensor und/oder einen in die Fernbedieneinheit (3) integrierten Kompass und/oder einen in die Fernbedieneinheit (3) integrierten Neigungssensor aufweisen,
• Eingabemittel, sodass Daten bezüglich der fixen Positionsrelation von einem Benutzer eingebbar sind,
• ein an dem Vermessungsstab (11), insbesondere der Aufnahme, elektronisch oder graphisch abgelegter Datensatz, der Informationen bezüglich der durch den Vermessungsstab (11) gewährleisteten fixen Positionsrelation umfasst, und einem in der Fernbedieneinheit (3) vorgesehenen Auslesemittel, sodass der Datensatz fernbedieneinheitsseitig auslesbar ist.

11. Handhaltbare Fernbedieneinheit (3) für eine mobile Zieleinheit (1) nach einem der Ansprüche 7 bis 10, wobei die Fernbedieneinheit (3) ein elektronisches grafisches Display (9) aufweist und derart an einer Aufnahme des Vermessungsstabs (11) der mobilen Zieleinheit (1) ansteckbar ist, dass sich die Fernbedieneinheit (3) - im angesteckten Zustand - in fixer Positionsrelation zu dem auf dem Vermessungsstab (11) angebrachten Ziel (12, 12', 12") befindet
**dadurch gekennzeichnet, dass**
• die Fernbedieneinheit (3) eine Kamera (5) zur Aufnahme von einem Kamerabild in definierter Aufnahmerichtung aufweist, und
• eine mit der Positionsbestimmungseinheit und der Kamera (5) in Datenverbindung stehende Bildverarbeitungs- und Auswerteeinheit vorgesehen ist, durch die - anhand Kenntnis der fixen Positionsrelation und der definierten Aufnahmerichtung sowie in Abhängigkeit von der bestimmten Zielposition - Bilddaten der Kamera (5) in dem Koordinatensystem in räumlichen Bezug mit den Zielpunkten (20) bringbar sind.

12. Handhaltbare Fernbedieneinheit (3) nach Anspruch 11,
**dadurch gekennzeichnet, dass**
die Kamera (5) und das Display (9) derart an der Fernbedieneinheit (3) angeordnet und ausgerichtet sind, dass für einen Bediener eine Durchblickmöglichkeit mittels der Kamera (5) auf einen Geländeboden ermöglicht ist, wobei die Flächennormale des Displays (9) im Wesentlichen parallel zur Aufnahmerichtung der Kamera (5) ausgerichtet ist, insbesondere wobei die optischen Achsen des Displays (9) und der Kamera (5) im Wesentlichen koaxial - jedoch die Blickrichtungen entgegengesetzt zueinander - ausgerichtet sind.

13. Handhaltbare Fernbedieneinheit (3) nach Anspruch 11 oder Anspruch 12,
**dadurch gekennzeichnet, dass**
die Kamera (5) derart ausgerichtet ist, dass - im an den Vermessungsstab (11) angesteckten Zustand der Fernbedieneinheit (3) - das untere Ende (13) des Vermessungsstabs (11) im Sichtfeld der Kamera (5) liegt.

14. Verfahren zum Abstecken und/oder Bestimmen einer Position eines Zielpunkts (20) mit einem Vermessungssystem nach einem der Ansprüche 1 bis 6 mit den folgenden Schritten:
• Anstecken einer handhaltbaren Fernbedieneinheit (3) mit einer daran angebrachten Kamera (5) an einen Vermessungsstab (11), dessen unteres Ende (13) in Zielpunktkontakt bringbar ist, wobei die Fernbedieneinheit (3) in einer fixen Positionsrelation zu einem auf dem Vermessungsstab (11) angebrachten Ziel (12, 12', 12'') angebracht wird,
• Erstellen bzw. Gewährleisten einer Verbindung zum Datenaustausch zwischen der mobilen Zieleinheit (1), insbesondere der Fernbedieneinheit (3), und der Positionsbestimmungseinheit (2, 2'),
• Ausrichten der Kamera (5) in Richtung eines Geländebodens, in dem Zielpunkte (20) abzustecken oder zu vermessen sind, und Aufnahme von Bildern und deren Anzeige auf einem Display (9) der Fernbedieneinheit (3) fortlaufend oder in definierten Zeitintervallen,
• Einblenden einer Richtungsangabe (21, dx, dy), insbesondere mittels eines Pfeils und/oder Distanzangaben, zu einem vorgesehenen Zielpunkt (20) und/oder einer Markierung (20') für die vorgesehene Position eines Zielpunkts (20) in das Bild der Kamera (5) im Display (9),
• Führen der Zieleinheit (1), bis eine Übereinstimmung der Abbildung (13', 20") mit der Markierung (20') für die vorgesehene Position des Zielpunkts (20) erreicht ist,
• Abstecken oder Bestimmen der Position des Zielpunkts (20), und optional
• Aufnehmen in Echtzeit und Abspeichern eines Bildes mittels der Kamera (5) von dem abgesteckten oder positionsbestimmten Zielpunkt (20).

15. Vermessungssystem mit einer - in ein kompaktes handhaltbares Gerät integrierten - mobilen Zieleinheit (1) zur Absteckung und/oder Positionsbestimmung von Zielpunkten (20) in einem definierten Koordinatensystem, wobei die Zieleinheit aufweist
• ein als Positionsbestimmungseinheit ausgebildetes GNSS-Modul (15) mit einer als Ziel ausgebildeten integrierten GNSS-Antenne (12"), zur Bestimmung der Ziel-Position in dem Koordinatensystem,
• einem elektronischen grafischen Display (9),
**dadurch gekennzeichnet, dass**
die Zieleinheit in ein kompaktes handhaltbares Gerät ohne einen Vermessungsstab integriert ist und ferner aufweist
• eine Kamera (5) zur Aufnahme von einem Kamerabild in einer definierten - in Arbeitsstellung des handhaltbaren Geräts grob vertikal nach unten gerichteten - Aufnahmerichtung,
• einen zweiachsigen Neigungsmesser (16) zur Bestimmung eines Nick- und Rollwinkels (35, 36) des Geräts,
• eine Ausrichtungsbestimmungseinheit zur Bestimmung einer azimutalen Ausrichtung (31) des Geräts, wobei die azimutale Ausrichtung insbesondere einem Gierwinkel des Geräts entspricht, und
• eine derart ausgebildete Bildverarbeitungs- und Auswerteeinheit, dass
□ anhand Kenntnis von sowohl einer fixen Positionsrelation von Kamera (5) relativ zum Ziel als auch der definierten Aufnahmerichtung der Kamera (5) sowie
□ in Abhängigkeit von der aktuell bestimmten Zielposition, den aktuell bestimmten Nick- und Rollwinkeln (35, 36) und der aktuell bestimmten azimutalen Ausrichtung (31)
für ein oder mehrere im Sichtfeld der Kamera (5) befindliche abzusteckende bzw. vermessene Zielpunkte (20), deren räumliche Koordinaten bekannt sind, eine Position im Kamerabild ableitbar ist und eine Markierung (20') für den einen bzw. die mehreren Zielpunkte (20) entsprechend der Position im Kamerabild diesem überlagert auf dem Display (9) anzeigbar ist.

## Claims

1. A survey system having a position determination unit (2, 2'), in particular a total station or a GNSS module, for determining a target position in a defined coordinate system, and having a mobile target unit (1) for definition and/or position determination of target points (20) in the coordinate system, wherein the target unit (1) comprises
• a survey stick (11), the lower end of which can be brought into target point contact,
• a target (12, 12', 12") which can be fitted on the survey stick (11) and the target position of which can be determined with high precision, in particular wherein the target (12, 12', 12") is formed as a survey reflector (12') which can be surveyed with the aid of a total station (2) or as a GNSS antenna (12") having a data link to the GNSS module of the position determination unit (2'),
• a handholdable remote control unit (3) for the survey system, wherein the remote control unit (3) comprises an electronic graphical display (9) and can be attached to a holder on the survey stick (11) in such a way that - in the attached state - the remote control unit (3) is in a fixed position relationship with respect to the target (12, 12', 12") fitted on the survey stick (11),
**characterized in that**
• the remote control unit (3) comprises a camera (5) for recording a camera image in a defined imaging direction, and
• an image processing and evaluation unit having a data link to the position determination unit (2, 2') and the camera (5) is provided, by which - with the aid of knowledge of the fixed position relationship and the defined imaging direction, and as a function of the target position determined - image data of the camera (5) can be brought into spatial relation with the target points (20) in the coordinate system.

2. The survey system as claimed in claim 1,
**characterized in that**
the camera (5)', the display (9), the position determination unit (2, 2') and the image processing and evaluation unit are formed and interact in such a way that, as a function of the currently determined target position for one or more target points (20) to be defined or surveyed, which lie in the field of view of the camera (5) and the spatial coordinates of which are known, a target point position in the camera image is derivable and a marking (20') for the one or more target points (20) can be displayed on the display (9) in accordance with the target point position in the camera image, overlaid thereon.

3. The survey system as claimed in either of claims 1 and 2,
**characterized in that**
the image processing and evaluation unit is configured in such a way that, in order to derive the target point positions in the camera image, a digital terrain model is used and jointly taken into account, in particular wherein a sensor for recording a digital terrain model of the terrain lying in the field of view of the camera - in particular an RIM sensor or a stereophotogrammetry module - is provided.

4. The survey system as claimed in any one of claims 1 to 3,
**characterized in that**
the camera (5), the display (9), the position determination unit (2, 2') and the image processing and evaluation unit are formed and interact in such a way that a film sequence acquired by the camera (5) can be displayed live on the display (9) and - overlaid on the displayed film sequence - as a function of the currently determined target position, one or more target points (20) to be defined or surveyed, the spatial coordinates of which are known, are marked in the camera image and can be displayed on the display (9).

5. The survey system as claimed in any one of claims 1 to 4,
**characterized in that**
the camera (5) and the display (9) are arranged and oriented on the remote control unit (3) in such a way as to allow an operator a possibility of viewing a terrain surface by means of the camera (5), wherein either
• the surface normal of the display (9) is oriented essentially parallel to the imaging direction of the camera, in particular wherein the optical axes of the display (9) and of the camera (5) are oriented essentially coaxially - but the viewing directions mutually opposite, or
• the surface normal of the display (9) is inclined by an angle of between 10 and 45°, in particular 30°, with respect to the imaging direction of the camera,
and in particular wherein the camera (5) is oriented in such a way that - when the remote control unit (3) is attached to the survey stick (11) - the lower end (13) of the survey stick (11) lies in the field of view of the camera (5).

6. The survey system as claimed in any one of claims 1 to 5,
**characterized in that**
- when the remote control unit (3) is attached to the survey stick (11) - owing to the structure of the survey stick (11) the fixed position relationship of the remote control unit (3) relative to the fitted target (12, 12', 12") is ensured, in particular wherein the fixed position relationship is made available to the image processing and evaluation unit with the aid of at least one of the following means:
• storage means, in which the fixed position relationship is stored,
• position relationship determination means, which make a current distance from the remote control unit (3) to the target (12, 12', 12") and/or a current orientation, in particular the azimuthal and/or elevational orientation, of the remote control unit (3) determinable, in particular wherein the position relationship determination means comprise a distance sensor and/or a compass integrated in the remote control unit (3) and/or an inclination sensor integrated in the remote control unit (3),
• input means, so that data relating to the fixed position relationship can be entered by a user,
• a data set stored electronically or graphically on the survey stick (11), in particular the holder, which comprises information relating to the fixed position relationship ensured by the survey stick (11), and a readout means provided in the remote control unit (3) so that the data set can be read out at the remote control unit.

7. A mobile target unit (1) for a survey system as claimed in any one of the preceding claims, comprising
• a survey stick (11), the lower end (13) of which can be brought into target point contact,
• a target (12, 12', 12") which can be fitted on the survey stick (11) and the target position of which can be determined with high precision, in particular wherein the target (12, 12', 12") is formed as a survey reflector (12') which can be surveyed with the aid of a total station (2) or as a GNSS antenna (12) having a data link to the GNSS module of the position determination unit (2'),
• a handholdable remote control unit (3) for the survey system, wherein the remote control unit (3) comprises an electronic graphical display (9) and can be attached to a holder on the survey stick (11) in such a way that - in the attached state - the remote control unit (3) is in a fixed position relationship with respect to the target (12, 12', 12") fitted on the survey stick (11),
**characterized in that**
• the remote control unit (3) comprises a camera (5) for recording a camera image in a defined imaging direction, and
• an image processing and evaluation unit having a data link to the position determination unit (2, 2') and the camera (5) is provided, by which - with the aid of knowledge of the fixed position relationship and the defined imaging direction, and as a function of the target position determined - image data of the camera (5) can be brought into spatial relation with the target points (20) in the coordinate system.

8. The mobile target unit (1) as claimed in claim 7,
**characterized in that**
the camera (5) and the display (9) are arranged and oriented on the remote control unit (3) in such a way as to allow an operator a possibility of viewing a terrain surface by means of the camera (5), wherein the surface normal of the display (9) is oriented essentially parallel to the imaging direction of the camera (5), in particular wherein the optical axes of the display (9) and of the camera (5) are oriented essentially coaxially - but the viewing directions mutually opposite.

9. The mobile target unit (1) as claimed in claim 7 or claim 8,
**characterized in that**
the camera (5) is oriented in such a way that - when the remote control unit (3) is attached to the survey stick (11) - the lower end (13) of the survey stick (11) lies in the field of view of the camera (5).

10. The mobile target unit as claimed in any one of claims 7 to 9,
**characterized in that**
- when the remote control unit (3) is attached to the survey stick (11) - owing to the structure of the survey stick (11) the fixed position relationship of the remote control unit (3) relative to the fitted target (12, 12', 12") is ensured, wherein the fixed position relationship is made available to the image processing and evaluation unit with the aid of at least one of the following means:
• storage means, in which the fixed position relationship is stored,
• position relationship determination means, which make a current distance from the remote control unit (3) to the target (12, 12', 12") and/or a current orientation, in particular the azimuthal and/or elevational orientation, of the remote control unit (3) determinable, in particular wherein the position relationship determination means comprise a distance sensor and/or a compass integrated in the remote control unit (3) and/or an inclination sensor integrated in the remote control unit (3),
• input means, so that data relating to the fixed position relationship can be entered by a user,
• a data set stored electronically or graphically on the survey stick (11), in particular the holder, which comprises information relating to the fixed position relationship ensured by the survey stick (11), and a readout means provided in the remote control unit (3) so that the data set can be read out at the remote control unit.

11. A handholdable remote control unit (3) for a mobile target unit (1) as claimed in any one of claims 7 to 10, wherein the remote control unit (3) comprises an electronic graphical display (9) and can be attached to a holder on the survey stick (11) of the mobile target unit (1) in such a way that - in the attached state - the remote control unit (3) is in a fixed position relationship with respect to the target (12, 12', 12") fitted on the survey stick (11), **characterized in that**
• the remote control unit (3) comprises a camera (5) for recording a camera image in a defined imaging direction, and
• an image processing and evaluation unit having a data link to the position determination unit and the camera (5) is provided, by which - with the aid of knowledge of the fixed position relationship and the defined imaging direction, and as a function of the target position determined - image data of the camera (5) can be brought into spatial relation with the target points (20) in the coordinate system.

12. The handholdable remote control unit (3) as claimed in claim 11,
**characterized in that**
the camera (5) and the display (9) are arranged and oriented on the remote control unit (3) in such a way as to allow an operator a possibility of viewing a terrain surface by means of the camera (5), wherein the surface normal of the display (9) is oriented essentially parallel to the imaging direction of the camera (5), in particular wherein the optical axes of the display (9) and of the camera (5) are oriented essentially coaxially - but the viewing directions mutually opposite.

13. The handholdable remote control unit (3) as claimed in claim 11 or claim 12,
**characterized in that**
the camera (5) is oriented in such a way that - when the remote control unit (3) is attached to the survey stick (11) - the lower end (13) of the survey stick (11) lies in the field of view of the camera (5).

14. A method for defining and/or determining a position of a target point (20) with a survey system as claimed in any one of claims 1 to 6, having the following steps:
• attaching a handholdable remote control unit (3), having a camera (5) fitted thereon, to a survey stick (11), the lower end (13) of which can be brought into target point contact, wherein the remote control unit (3) is attached in a fixed position relationship with respect to a target (12, 12', 12") fitted on the survey stick (11),
• establishing or ensuring a data interchange link between the mobile target unit (1), in particular the remote control unit (3), and the position determination unit (2, 2'),
• arranging the camera (5) in the direction of a terrain surface, in which target points (20) are to be defined or surveyed, and recording images and displaying them on a display (9) of the remote control unit (3) continuously or at defined time intervals,
• inserting a direction indicator (21, dx, dy), in particular by means of an arrow, and/or indicators of distance to an intended target point (20) and/or a marking (20') for the intended position of a target point (20), into the image of the camera (5) in the display (9),
• guiding the target unit (1) until a match of the image (13', 20") with the marking (20') for the intended position of the target point (20) is achieved,
• defining or determining the position of the target point (20), and optionally
• recording in real time and storing an image of the defined or position-determined target point (20) by means of the camera (5).

15. A survey system having a - integrated in a compact handholdable apparatus - mobile target unit (1) for definition and/or position determination of target points (20) in a defined coordinate system, wherein the target unit comprises
• a GNSS module (15) formed as a position determination unit, having an integrated GNSS antenna (12") formed as a target, for determining the target position in the coordinate system,
• an electronic graphical display (9),
**characterized in that**
the target unit is integrated in a compact handholdable apparatus without a survey stick and furthermore comprises
• a camera (5) for recording a camera image in a defined imaging direction - directed approximately vertically downward in the working position of the handholdable apparatus,
• a biaxial inclinometer (16) for determining a pitch angle and a roll angle (35, 36) of the apparatus,
• an orientation determination unit for determining an azimuthal orientation (31) of the apparatus, wherein the azimuthal orientation corresponds in particular to a yaw angle of the apparatus, and
• an image processing and evaluation unit, which is formed in such a way that
□ with the aid of knowledge of both a fixed position relationship of the camera (5) relative to the target and of the defined imaging direction of the camera (5), and
□ as a function of the currently determined target position, the currently determined pitch and roll angles (35, 36) and the currently determined azimuthal orientation (31)
for one or more target points (20) to be defined or surveyed, which lie in the field of view of the camera (5) and the spatial coordinates of which are known, a position in the camera image is derivable and a marking (20') for the one or more target points (20) can be displayed on the display (9) in accordance with the position in the camera image, overlaid thereon.

## Revendications

1. Système de mesure avec une unité de détermination de la position (2, 2'), en particulier une station totale ou un module GNSS, pour déterminer une position cible dans un système de coordonnées défini et avec une unité cible mobile (1) pour l'implantation et/ou la détermination de position de points cible (20) dans le système de coordonnées, l'unité cible (1) présentant
• une tige de mesure (11) dont l'extrémité inférieure peut être amenée en contact avec le point cible,
• une cible (12, 12', 12"), qui peut être fixée sur la tige de mesure (11), dont la position cible peut être déterminée avec une grande précision, en particulier cependant que la cible (12, 12', 12") est configurée comme un réflecteur de mesure (12') qui peut être implanté à l'aide d'une station totale (2) ou comme une antenne GNSS (12") qui est en relation de données avec le module GNSS de l'unité de détermination de position (2'),
• une unité de télécommande portative (3) pour le système de mesure, cependant que l'unité de télécommande (3) présente un écran graphique électronique (9) et peut être emboîtée sur un logement de la tige de mesure (11) de telle manière que l'unité de télécommande (3) - à l'état emboîté - se trouve en relation de position fixe avec la cible (12, 12', 12") fixée sur la tige de mesure (11),
**caractérisé en ce que**
• l'unité de télécommande (3) présente une caméra (5) pour prendre la prise de vue d'une image de caméra dans une direction définie de prise de vues et
• qu'il est prévu une unité de traitement et d'exploitation d'image qui est en relation de données avec l'unité de détermination de position (2, 2') et la caméra, unité par laquelle des données d'image de la caméra (5) dans le système de coordonnées peuvent être amenées dans une relation spatiale avec les points cible (20) à l'aide de la connaissance de la relation de position fixe et de la direction définie de prise de vues, et qu'en fonction de la position cible déterminée.

2. Système de mesure selon la revendication 1, **caractérisé en ce que** la caméra (5), l'écran (9), l'unité de détermination de position (2, 2') ainsi que l'unité de traitement et d'exploitation d'image sont configurés telles et coopèrent de telle manière qu'en fonction de la position cible actuellement déterminée pour un ou plusieurs points cible (20) qui se trouvent dans le champ de vision de la caméra (5), qui doivent être implantés ou mesurés (20), dont les coordonnées spatiales sont connues, une position de point cible peut être dérivée dans l'image de la caméra et un marquage (20') pour le ou plusieurs points cibles (20) peut être affiché selon la position de point cible dans l'image de la caméra en étant superposé à celle-ci sur l'écran (9).

3. Système de mesure selon l'une des revendications 1 ou 2, **caractérisé en ce que** l'unité de traitement et d'exploitation d'image est configurée de telle manière que l'on se sert et on tient compte d'un modèle numérique de terrain pour dériver les positions de point cible dans l'image de la caméra, en particulier cependant qu'un capteur est prévu pour détecter un modèle numérique de terrain du terrain qui se trouve dans le champ de vision de la caméra - en particulier un capteur RIM ou un module de stéréophotogrammétrie.

4. Système de mesure selon l'une des revendications 1 à 3, **caractérisé en ce que** la caméra (5), l'écran (9), l'unité de détermination de position (2, 2') ainsi que l'unité de traitement et d'exploitation d'image sont configurés telles et coopèrent de telle manière qu'une séquence de film prise par la caméra (5) peut être affichée en direct sur l'écran (9) et qu'en fonction de la position cible actuellement déterminée un ou plusieurs points cible (20) qui doivent être implantés ou mesurés (20), dont les coordonnées spatiales sont connues, sont marqués dans l'image de la caméra - en étant superposés à la séquence de film affichée - et peuvent être affichés sur l'écran (9).

5. Système de mesure selon l'une des revendications 1 à 4, **caractérisé en ce que** la caméra (5) et l'écran (9) sont placés et sont orientés sur l'unité de télécommande (3) de telle manière qu'une possibilité de vision d'un sol est possible pour un utilisateur au moyen de la caméra (5), cependant que soit
• la normale à la surface de l'écran (9) est orientée substantiellement parallèlement à la direction de prise de vues de la caméra, en particulier cependant que les axes optiques de l'écran (9) et de la caméra (5) sont orientés substantiellement de manière coaxiale - les directions de visées étant cependant opposées l'une à l'autre, soit
• la normale à la surface de l'écran (9) est orientée de manière inclinée par rapport à la direction de prise de vues de la caméra d'un angle entre 10 et 45°, en particulier de 30°,
et en particulier cependant que la caméra (5) est orientée de telle manière que, lorsque l'unité de télécommande (3) est à l'état emboîté sur la tige de mesure (11), l'extrémité inférieure (13) de la tige de mesure (11) se situe dans le champ de vision de la caméra (5).

6. Système de mesure selon l'une des revendications 1 à 5, **caractérisé en ce que**, lorsque l'unité de télécommande (3) est à l'état emboîté sur la tige de mesure (11), la relation de position fixe de l'unité de télécommande (3) par rapport à la cible fixée (12, 12', 12") est garantie par la structure de la tige de mesure (11), en particulier cependant que la relation de position fixe de l'unité de traitement et d'exploitation d'image est rendue disponible à l'aide d'au moins l'un des moyens suivants :
• moyen de mémorisation dans lesquels la relation de position fixe est mémorisée,
• moyens de détermination de la relation de position qui rendent définissable une distance actuelle de l'unité de télécommande (3) par rapport à la cible (12, 12', 12") et/ou une orientation actuelle, en particulier l'orientation azimutale et/ou en élévation de l'unité de télécommande (3), en particulier cependant que les moyens de détermination de la relation de position présentent un capteur de distance et/ou une boussole intégrée à l'unité de télécommande (3) et/ou un capteur d'inclinaison intégré à l'unité de télécommande (3),
• des moyens d'entrée si bien que les données concernant la relation de position fixe peuvent être entrées par un utilisateur,
• un jeu de données enregistré par voie électronique ou graphique sur la tige de mesure (11), en particulier le logement, qui comprend des informations concernant la relation de position fixe garantie par la tige de mesure (11), et un moyen de lecture prévu dans l'unité de télécommande (3) si bien que le jeu de données peut être lu du côté de l'unité de télécommande.

7. Unité cible mobile (1) pour un système de mesure selon l'une des revendications précédentes avec
• une tige de mesure (11) dont l'extrémité inférieure (13) peut être amenée en contact avec le point cible,
• une cible (12, 12', 12") qui peut être fixée sur la tige de mesure (11) dont la position de cible peut être déterminée avec une grande précision, en particulier cependant que la cible (12, 12', 12") est configurée comme un réflecteur de mesure (12') qui peut être implanté à l'aide d'une station totale (2) ou comme une antenne GNSS (12') qui est en relation de données avec le module GNSS de l'unité de détermination de position (2'),
• une télécommande portative (3) pour le système de mesure, cependant que l'unité de télécommande (3) présente un écran graphique électronique (9) et peut être emboîtée sur un logement de la tige de mesure (11) de telle manière que l'unité de télécommande (3) se trouve - à l'état emboîté - en relation de position fixe par rapport à la cible (12, 12', 12") fixée sur la tige de mesure (11),
**caractérisée en ce que**
• l'unité de télécommande (3) présente une caméra (5) pour la prise de vue d'une image de caméra dans une direction définie de prise de vues et
• qu'il est prévu une unité de traitement et d'exploitation d'image qui est en relation de données avec l'unité de détermination de position (2, 2') et la caméra, unité par laquelle des données d'image de la caméra (5) dans le système de coordonnées peuvent être amenées dans une relation spatiale avec les points cible (20) à l'aide de la connaissance de la relation de position fixe et de la direction définie de prise de vues, et qu'en fonction de la position cible déterminée.

8. Unité cible mobile (1) selon la revendication 7,
**caractérisée en ce que** la caméra (5) et l'écran (9) sont placés et sont orientés sur l'unité de télécommande (3) de telle manière qu'une possibilité de vision d'un sol est possible pour un utilisateur au moyen de la caméra (5), cependant que la normale à la surface de l'écran (9) est orientée substantiellement parallèlement à la direction de prise de vues de la caméra, en particulier cependant que les axes optiques de l'écran (9) et de la caméra (5) sont orientés substantiellement de manière coaxiale - les directions de visées étant cependant opposées l'une à l'autre.

9. Unité cible mobile (1) selon la revendication 7 ou la revendication 8, **caractérisée en ce que** la caméra (5) est orientée de telle manière que, lorsque l'unité de télécommande (3) est à l'état emboîté sur la tige de mesure (11), l'extrémité inférieure (13) de la tige de mesure (11) se situe dans le champ de vision de la caméra (5).

10. Unité cible selon l'une des revendications 7 à 9, **caractérisée en ce que**, lorsque l'unité de télécommande (3) est à l'état emboîté sur la tige de mesure (11), la relation de position fixe de l'unité de télécommande (3) par rapport à la cible fixée (12, 12', 12") est garantie par la structure de la tige de mesure (11), cependant que la relation de position fixe de l'unité de traitement et d'exploitation d'image est rendue disponible à l'aide d'au moins l'un des moyens suivants :
• moyen de mémorisation dans lesquels la relation de position fixe est mémorisée,
• moyens de détermination de la relation de position qui rendent définissable une distance actuelle de l'unité de télécommande (3) par rapport à la cible (12, 12', 12") et/ou une orientation actuelle, en particulier l'orientation azimutale et/ou en élévation de l'unité de télécommande (3), en particulier cependant que les moyens de détermination de la relation de position présentent un capteur de distance et/ou une boussole intégrée à l'unité de télécommande (3) et/ou un capteur d'inclinaison intégré à l'unité de télécommande (3),
• des moyens d'entrée si bien que les données concernant la relation de position fixe peuvent être entrées par un utilisateur,
• un jeu de données enregistré par voie électronique ou graphique sur la tige de mesure (11), en particulier le logement, qui comprend des informations concernant la relation de position fixe garantie par la tige de mesure (11), et un moyen de lecture prévu dans l'unité de télécommande (3) si bien que le jeu de données peut être lu du côté de l'unité de télécommande.

11. Unité de télécommande portative (3) pour une unité cible mobile (1) selon l'une des revendications 7 à 10, cependant que l'unité de télécommande (3) présente un écran graphique électronique (9) et peut être emboîtée sur un logement de la tige de mesure (11) de l'unité cible mobile (1) de telle manière que l'unité de télécommande (3) se trouve - à l'état emboîté - en relation de position fixe par rapport à la cible (12, 12', 12") fixée sur la tige de mesure (11),
**caractérisée en ce que**
• l'unité de télécommande (3) présente une caméra (5) pour prendre la prise de vue d'une image de caméra dans une direction définie de prise de vues et
• qu'il est prévu une unité de traitement et d'exploitation d'image qui est en relation de données avec l'unité de détermination de position (2, 2') et la caméra, unité par laquelle des données d'image de la caméra (5) dans le système de coordonnées peuvent être amenées dans une relation spatiale avec les points cible (20) à l'aide de la connaissance de la relation de position fixe et de la direction définie de prise de vues, et qu'en fonction de la position cible déterminée.

12. Unité de télécommande portative (3) selon la revendication 11, **caractérisée en ce que** la caméra (5) et l'écran (9) sont placés et sont orientés sur l'unité de télécommande (3) de telle manière qu'une possibilité de vision d'un sol de terrain est possible pour un utilisateur au moyen de la caméra (5), cependant que la normale à la surface de l'écran (9) est orientée substantiellement parallèlement à la direction de prise de vues de la caméra, en particulier cependant que les axes optiques de l'écran (9) et de la caméra (5) sont orientés substantiellement de manière coaxiale - les directions de visée étant cependant opposées l'une à l'autre.

13. Unité de télécommande portative (3) selon la revendication 11 ou 12, **caractérisée en ce que** la caméra (5) est orientée de telle manière que, lorsque l'unité de télécommande (3) est à l'état emboîté sur la tige de mesure (11), l'extrémité inférieure (13) de la tige de mesure (11) se situe dans le champ de vision de la caméra (5).

14. Procédé pour implanter et/ou déterminer une position d'un point cible (20) avec un système de mesure selon l'une des revendications 1 à 6 avec les étapes suivantes :
• emboîtement d'une unité de télécommande portative (3) avec une caméra (5) qui y est fixée sur une tige de mesure (11) dont l'extrémité inférieure (13) peut être amenée en contact avec le point cible, cependant que l'unité de télécommande (3) est fixée dans une relation de position fixe par rapport à une cible (12, 12', 12") fixée sur la tige de mesure (11),
• établissement ou garantie d'une connexion pour l'échange de données entre l'unité cible mobile (1), en particulier de l'unité de télécommande (3), et l'unité de détermination de position (2, 2'),
• orientation de la caméra (5) en direction d'un sol dans lequel des points cible (20) doivent être implantés ou mesurés, et prise d'images et affichage de celles-ci sur un écran (9) de l'unité de télécommande (3) en continu ou à des intervalles de temps définis,
• affichage d'une indication de direction (21, dx, dy), en particulier au moyen d'une flèche et/ou d'indications de distance, par rapport à un point cible prévu (20) et/ou à un marquage (20') pour la position prévue d'un point cible (20) dans l'image de la caméra (5) dans l'écran (9),
• guidage de l'unité cible (1) jusqu'à ce qu'une concordance de la représentation (13', 20") avec le marquage (20') soit obtenue pour la position prévue du point cible (20),
• implantation ou détermination de la position du point cible (20) et, en option,
• prise de vue en temps réel et mémorisation d'une image au moyen de la caméra (5) du point cible implanté ou dont la position a été déterminée (20).

15. Système de mesure avec une unité cible mobile (1) - intégrée dans un appareil portatif compact - pour l'implantation et/ou la détermination de position de points cible (20) dans un système de coordonnées défini, cependant que l'unité cible présente
• un module GNSS (15) configuré comme unité de détermination de position avec une antenne GNSS intégrée (12"), configurée comme cible, pour déterminer la position cible dans le système de coordonnées,
• un écran graphique électronique (9),
**caractérisé en ce que** l'unité cible est intégrée dans un appareil portatif compact sans tige de mesure et présente en outre
• une caméra (5) pour la prise d'une image de caméra dans une direction de prise de vues définie - orientée grossièrement verticalement vers le bas dans la position de travail de l'appareil portatif,
• un inclinomètre à deux axes (16) pour déterminer un angle d'inclinaison et de roulis (35, 36) de l'appareil,
• une unité de détermination de l'orientation pour déterminer une orientation azimutale (31) de l'appareil, cependant que l'orientation azimutale correspond en particulier à un angle d'embardée de l'appareil et
• une unité de traitement et d'exploitation d'image configurée de telle manière
□ qu'à l'aide de la connaissance d'une relation de position fixe de la caméra (5) par rapport à la cible aussi bien que de la direction de prise de vues définie de la caméra (5) ainsi
□ qu'en fonction de la position cible actuellement déterminée, des angles d'inclinaison et de roulis actuellement déterminés (35, 36) et de l'orientation azimutale actuellement déterminée (31)
une position peut être dérivée dans l'image de caméra pour un ou plusieurs points cible (20) qui se situent dans le champ visuel de la caméra (5) qui doivent être implantés ou mesurés, dont les coordonnées spatiales sont connues, et un marquage (20') peut être affiché sur l'écran (9) pour le ou plusieurs points cible (20) en étant superposé dans l'image de la caméra selon la position dans l'image de la caméra.
